# EUROPEAN PATENT APPLICATION

(11) **EP 4 425 965 A1**
(43) Date of publication of application: **04.09.2024**
(21) Application number: 22885781.9
(22) Date of filing: 20.10.2022
(51) Int. Cl.: H04W 4/02, H04W 64/00

(54) **POSITIONING METHOD AND APPARATUS, TERMINAL, BASE STATION, AND POSITIONING SERVER**

(30) Priority: 25.10.2021 CN 202111241622
(71) Applicant: Datang Mobile Communications Equipment Co., Ltd., Beijing 100085 (CN)
(72) Inventor: LI, Jianxiang, Beijing 100085 (CN)
(74) Representative: Studio Torta S.p.A.
(86) International application number: PCT/CN2022/126396
(87) International publication number: WO 2023/071903

(57) **Abstract**

A positioning method, a device, a terminal, a base station and a positioning server are provided. The method includes: when the terminal is in an inactive state or an idle state, sending a positioning wake-up indication to a base station.

## Description

### CROSS REFERENCE OF RELATED APPLICATION

The present disclosure claims a priority of Chinese patent disclosure No. 202111241622.X filed on October 25, 2021, which is incorporated herein by reference in its entirety.

### TECHNICAL FIELD

The present disclosure relates to the field of communication technology, and in particular, to a positioning method, a device, a terminal, a base station and a positioning server.

### BACKGROUND

Currently, the positioning of related terminals (User Equipment, UE) is completed in the connected state, and the terminal UE and the base station are in a synchronous connection state. Uplink positioning in the connected state requires multiple interactions with the core network. The positioning process is usually as follows: the core network recommends the channel sounding reference signal (SRS) to the serving base station, and then configures and activates the SRS for the terminal through the serving base station, and instructs the UE to send SRS, and the Location Management Function (LMF) server instructs surrounding neighboring base stations to receive SRS, then each base station receive and measure the SRS signal sent by the UE in the connected state to complete uplink positioning.

The current standard will introduce inactive state positioning. When the UE detects that the positioning request meets the conditions, it is expected to start the UE positioning process directly in the inactive state or even the idle state. However, in the inactive state or idle state, how the UE sends the uplink positioning signal so that the surrounding base stations can receive it correctly is a very big problem. Because there may be uplink desynchronization, there are a series of problems such as when the base station starts the uplink measurement opportunity, and whether the base station can monitor the SRS signal at all times. Therefore, if the SRS positioning signal configured by the serving base station used in the connected state positioning is simply used as the inactive state or the idle state positioning, the positioning requirements cannot be met. It is necessary to find positioning signals and processes suitable for the inactive state or the idle state to minimize the coupling of resource allocation between the UE and the core network and more efficiently support the positioning in the inactive/idle stat while further reducing terminal power consumption, the related art is unable to meet these needs.

### SUMMARY

This disclosure is to provide a positioning method, device, terminal, base station and positioning server to solve the positioning problem of the terminal in the inactive/idle state.

A positioning method is provided in the embodiment of the present disclosure, performed by a terminal and including:
when the terminal is in an inactive state or an idle state, sending a positioning wake-up indication to a base station.

Optionally, the sending the positioning wake-up indication to the base station includes:
sending the positioning wake-up indication to the base station, through one of a preset configuration resource, a random access process and a dedicated signaling;
where the preset configuration resource is an exclusive resource configured by the base station for the terminal, or the preset configuration resource is an exclusive resource broadcasted by the base station.

Optionally, the sending the positioning wake-up indication to the base station through the preset configuration resource includes one of the following:
sending the positioning wake-up indication to the base station, by sending a preset preamble at a preset opportunity on a physical random access channel (PRACH);
sending the positioning wake-up indication to the base station, by sending a Message 1 or a Message A of the random access process by sending a preset preamble at a preset opportunity on a PRACH.

Optionally, the sending the positioning wake-up indication to the base station through the random access process includes:
through a Message 3 in a four-step random access process, or a Message A in a two-step random access process, sending the positioning wake-up indication to the base station, where the positioning wake-up indication is configured to request the base station to allocate an uplink positioning resource for the terminal.

Optionally, subsequent to the sending the positioning wake-up indication, the method further includes:
receiving a preset uplink positioning resource which is configured by the base station for the terminal to send an uplink positioning signal;
where the preset uplink positioning resource includes a Sounding Reference Signal (SRS) configuration resource and/or a Physical Random Access Channel (PRACH) configuration resource.

Optionally, the receiving the preset uplink positioning resource which is configured by the base station for the terminal to send the uplink positioning signal includes:
receiving the preset uplink positioning resource configured by the base station for the terminal, through a random access process and /or a dedicated signaling.

Optionally, when the positioning wake-up indication is sent to the base station through the Message 1 in the four-step random access process, the method includes:
receiving a Message 2 sent by the base station, where the Message 2 includes an uplink positioning resource index pre-configured by the base station;
sending a Message 3 to the base station, where the Message 3 includes the uplink positioning resource requested by the terminal according to the uplink positioning resource index;
receiving a Message 4 sent by the base station, where the Message 4 includes an uplink positioning resource configured by the base station for the terminal according to the uplink positioning resource requested by the terminal.

Optionally, the method further includes:
sending an uplink positioning signal to the base station through a preset uplink positioning resource;
where the preset uplink positioning resource is the exclusive resource pre-configured by the base station to the terminal; or
the preset uplink positioning resource is an uplink positioning resource allocated by the base station to the terminal after the terminal sends the positioning wake-up indication to the base station.

Optionally, the uplink positioning signal includes a PRACH channel and/or an SRS signal.

Optionally, subsequent to the receiving the uplink positioning resource configured by the base station for the terminal to send the uplink positioning signal, the method further includes:
sending an uplink positioning request to the base station;
where the uplink positioning request is configured to request performing an uplink positioning service, and the uplink positioning request includes a S-Temporary Mobile Subscription Identifier (S-TMSI).

A positioning method is further provided in an embodiment of the present disclosure, performed by a base station and including:
receiving a positioning wake-up indication which is sent to the base station by a terminal in an inactive state or an idle state;
sending a positioning report message of the terminal to a positioning server, according to the positioning wake-up indication;
where the positioning reporting message includes a terminal identification of the terminal; or, the positioning reporting message includes a preset uplink positioning resource allocated by the base station for the terminal to send an uplink positioning signal.

Optionally, the receiving the positioning wake-up indication sent by the terminal to the base station includes:
receiving the positioning wake-up indication which is sent by the terminal to the base station through one of a preset configuration resource, a random access process and a dedicated signaling;
where the preset configuration resource is an exclusive resource configured by the base station to the terminal, or the preset configuration resource is an exclusive resource broadcasted by the base station.

Optionally, the receiving the positioning wake-up indication sent through the preset configuration resource includes:
receiving the positioning wake-up indication;
where the positioning wake-up indication is sent by sending a preset preamble at a preset opportunity on a physical random access channel (PRACH); or
the positioning wake-up indication is sent by sending a Message 1 or a Message A of a random access process by sending a preset preamble at a preset opportunity on a PRACH.

Optionally, the receiving the positioning wake-up indication which is sent by the terminal to the base station through the random access process includes:
receiving the positioning wake-up indication which is sent by the terminal to the base station through a Message 3 in a four-step random access process or a Message A in a two-step random access process, where the positioning wake-up indication is configured to request the base station to allocate the uplink positioning resource to the terminal.

Optionally, subsequent to the receiving the positioning wake-up indication which is sent by the terminal to the base station through the random access process, the method further includes:
sending to the terminal, the preset uplink positioning resource configured for the terminal to send the uplink positioning signal, through the random access process or the dedicated signaling;
where the preset uplink positioning resource includes a Sounding Reference Signal (SRS) configuration resource and/or a Physical Random Access Channel (PRACH) configuration resource.

Optionally, the positioning method further includes:
encapsulating the preset uplink positioning resource configured for the terminal, and sending the encapsulated preset uplink positioning resource to a core network.

Optionally, when the positioning wake-up indication sent by the terminal is received through the Message 1 in the random access process, the method further includes:
in response to the Message 1, sending a Message 2 to the terminal, where the Message 2 includes an uplink positioning resource index pre-configured by the base station;
receiving a Message 3 sent by the terminal, where the Message 3 includes the uplink positioning resource requested by the terminal according to the uplink positioning resource index;
sending a Message 4 to the terminal, where the Message 4 includes an uplink positioning resource configured by the base station for the terminal according to the uplink positioning resource requested by the terminal.

Optionally, the positioning method further includes:
receiving an uplink positioning signal which is sent by the terminal to the base station through the preset uplink positioning resource;
where the preset uplink positioning resource is an exclusive resource pre-configured by the base station for the terminal; or
the preset uplink positioning resource is an uplink positioning resource allocated by the base station for the terminal after the terminal sends the positioning wake-up indication to the base station.

Optionally, the uplink positioning signal includes a PRACH channel and/or an SRS signal.

Optionally, the positioning method further includes:
sending resource configuration information to the terminal through the dedicated signaling;
the resource configuration information includes the preset configuration resource and/or preset uplink positioning resource used for sending the uplink positioning signal;
where different terminals correspond to different preset configuration resources and different preset uplink positioning resources.

Optionally, subsequent to the sending resource configuration information to the terminal, the method further includes:
sending a resource association indication information to a positioning server; where the resource association indication information records an association relationship between the preset uplink positioning resource and the terminal identification of the terminal.

Optionally, the positioning method further includes:
sending a candidate resource for sending the uplink positioning signal in a current cell to the positioning server;
obtaining a recommended resource which is sent by the positioning server based on candidate resources of multiple base stations;
determining a preconfigured uplink positioning resource according to the recommended resource; and
broadcasting the uplink positioning resource.

Optionally, the positioning method further includes:
broadcasting a preset PRACH opportunity and a preset preamble for sending the positioning wake-up indication.

A positioning method is further provided in an embodiment of the present disclosure, performed by a positioning server and including:
receiving a positioning report message sent by a base station, where the positioning report message is used for an uplink positioning of a terminal which is in an inactive state or an idle state;
determining a uplink positioning resource used for the terminal to send an uplink positioning signal, according to the positioning report message;
where the positioning report message includes a terminal identification of the terminal, and the uplink positioning resource used for the terminal to send the uplink positioning signal is determined according to a pre-recorded association between the terminal identification and the uplink positioning resource pre-configured by the base station; or
the positioning report message includes the uplink positioning resource allocated by the base station for the terminal to send an uplink positioning signal.

Optionally, the positioning method further includes:
sending a positioning signal indication to a neighboring base station of the base station, where the positioning signal indication includes the uplink positioning resource, and is configured to instruct the neighboring base station to use the uplink positioning resource to receive the uplink positioning signal.

A terminal is further provided in the embodiment of the present disclosure, including a storage, a transceiver, and a processor;
where the storage is configured to store computer programs; the transceiver is configured to send and receive data under a control of the processor; the processor is configured to read the computer programs in the storage to perform:
when the terminal is in an inactive state or an idle state, sending a positioning wake-up indication to a base station.

Optionally, the sending the positioning wake-up indication to the base station includes:
sending the positioning wake-up indication to the base station, through one of a preset configuration resource, a random access process and a dedicated signaling;
where the preset configuration resource is an exclusive resource configured by the base station for the terminal, or the preset configuration resource is an exclusive resource broadcasted by the base station.

Optionally, the sending the positioning wake-up indication to the base station through the preset configuration resource includes one of the following:
sending the positioning wake-up indication to the base station, by sending a preset preamble at a preset opportunity on a physical random access channel (PRACH);
sending the positioning wake-up indication to the base station, by sending a Message 1 or a Message A of the random access process by sending a preset preamble at a preset opportunity on a PRACH.

Optionally, the sending the positioning wake-up indication to the base station through the random access process includes:
through a Message 3 in a four-step random access process, or a Message A in a two-step random access process, sending the positioning wake-up indication to the base station, where the positioning wake-up indication is configured to request the base station to allocate an uplink positioning resource for the terminal.

Optionally, subsequent to the sending the positioning wake-up indication, the processor is further configured to perform:
receiving a preset uplink positioning resource which is configured by the base station for the terminal to send an uplink positioning signal;
where the preset uplink positioning resource includes a Sounding Reference Signal (SRS) configuration resource and/or a Physical Random Access Channel (PRACH) configuration resource.

Optionally, the receiving the preset uplink positioning resource which is configured by the base station for the terminal to send the uplink positioning signal includes:
receiving the preset uplink positioning resource configured by the base station for the terminal, through a random access process and /or a dedicated signaling.

Optionally, when the positioning wake-up indication is sent to the base station through the Message 1 in the four-step random access process, the processor is further configured to perform:
receiving a Message 2 sent by the base station, where the Message 2 includes an uplink positioning resource index pre-configured by the base station;
sending a Message 3 to the base station, where the Message 3 includes the uplink positioning resource requested by the terminal according to the uplink positioning resource index;
receiving a Message 4 sent by the base station, where the Message 4 includes an uplink positioning resource configured by the base station for the terminal according to the uplink positioning resource requested by the terminal.

Optionally, the processor is further configured to perform:
sending an uplink positioning signal to the base station through a preset uplink positioning resource;
where the preset uplink positioning resource is the exclusive resource pre-configured by the base station to the terminal; or
the preset uplink positioning resource is an uplink positioning resource allocated by the base station to the terminal after the terminal sends the positioning wake-up indication to the base station.

A base station is further provided in the embodiment of the present disclosure, including a storage, a transceiver, and a processor;
where the storage is configured to store computer programs; the transceiver is configured to send and receive data under a control of the processor; the processor is configured to read the computer programs in the storage to perform:
receiving a positioning wake-up indication which is sent to the base station by a terminal in an inactive state or an idle state;
sending a positioning report message of the terminal to a positioning server, according to the positioning wake-up indication;
where the positioning reporting message includes a terminal identification of the terminal; or, the positioning reporting message includes a preset uplink positioning resource allocated by the base station for the terminal to send an uplink positioning signal.

Optionally, the receiving the positioning wake-up indication sent through the preset configuration resource includes:
receiving the positioning wake-up indication;
where the positioning wake-up indication is sent by sending a preset preamble at a preset opportunity on a physical random access channel (PRACH); or
the positioning wake-up indication is sent by sending a Message 1 or a Message A of a random access process by sending a preset preamble at a preset opportunity on a PRACH.

Optionally, the receiving the positioning wake-up indication which is sent by the terminal to the base station through the random access process includes:
receiving the positioning wake-up indication which is sent by the terminal to the base station through a Message 3 in a four-step random access process or a Message A in a two-step random access process, where the positioning wake-up indication is configured to request the base station to allocate the uplink positioning resource to the terminal.

Optionally, after receiving the positioning wake-up indication which is sent by the terminal to the base station through the random access process, the processor is further configured to perform:
sending to the terminal, the preset uplink positioning resource configured for the terminal to send the uplink positioning signal, through the random access process or the dedicated signaling;
where the preset uplink positioning resource includes a Sounding Reference Signal (SRS) configuration resource and/or a Physical Random Access Channel (PRACH) configuration resource.

Optionally, the processor is further configured to perform:
encapsulating the preset uplink positioning resource configured for the terminal, and sending the encapsulated preset uplink positioning resource to a core network.

Optionally, when the positioning wake-up indication sent by the terminal is received through the Message 1 in the random access process, the processor is further configured to perform:
in response to the Message 1, send a Message 2 to the terminal, where the Message 2 includes an uplink positioning resource index pre-configured by the base station;
receiving a Message 3 sent by the terminal, where the Message 3 includes the uplink positioning resource requested by the terminal according to the uplink positioning resource index;
sending a Message 4 to the terminal, where the Message 4 includes an uplink positioning resource configured by the base station for the terminal according to the uplink positioning resource requested by the terminal.

Optionally, the processor is further configured to perform:
receiving an uplink positioning signal which is sent by the terminal to the base station through the preset uplink positioning resource;
where the preset uplink positioning resource is an exclusive resource pre-configured by the base station for the terminal; or
the preset uplink positioning resource is an uplink positioning resource allocated by the base station for the terminal after the terminal sends the positioning wake-up indication to the base station.

Optionally, the uplink positioning signal includes a PRACH channel and/or an SRS signal.

Optionally, the processor is further configured to perform:
sending resource configuration information to the terminal through the dedicated signaling;
the resource configuration information includes the preset configuration resource and/or preset uplink positioning resource used for sending the uplink positioning signal;
where different terminals correspond to different preset configuration resources and different preset uplink positioning resources.

Optionally, after sending the resource configuration information to the terminal, the processor is further configured to perform:
sending a resource association indication information to a positioning server; where the resource association indication information records an association relationship between the preset uplink positioning resource and the terminal identification of the terminal.

Optionally, the processor is further configured to perform:
sending a candidate resource for sending the uplink positioning signal in a current cell to the positioning server;
obtaining a recommended resource which is sent by the positioning server based on candidate resources of multiple base stations;
determining a preconfigured uplink positioning resource according to the recommended resource; and
broadcasting the uplink positioning resource.

Optionally, the processor is further configured to perform:
broadcasting a preset PRACH opportunity and a preset preamble for sending the positioning wake-up indication.

A positioning server is further provided in the embodiment of the present disclosure, including a storage, a transceiver, and a processor;
where the storage is configured to store computer programs; the transceiver is configured to send and receive data under a control of the processor; the processor is configured to read the computer programs in the storage to perform:
receiving a positioning report message sent by a base station, where the positioning report message is used for an uplink positioning of a terminal which is in an inactive state or an idle state;
determining a uplink positioning resource used for the terminal to send an uplink positioning signal, according to the positioning report message;
where the positioning report message includes a terminal identification of the terminal, and the uplink positioning resource used for the terminal to send the uplink positioning signal is determined according to a pre-recorded association between the terminal identification and the uplink positioning resource pre-configured by the base station; or
the positioning report message includes the uplink positioning resource allocated by the base station for the terminal to send an uplink positioning signal.

Optionally, the processor is further configured to perform:
sending a positioning signal indication to a neighboring base station of the base station, where the positioning signal indication includes the uplink positioning resource, and is configured to instruct the neighboring base station to use the uplink positioning resource to receive the uplink positioning signal.

A positioning device is further provided in the embodiment of the present disclosure, performed by a terminal, the device includes:
a first sending unit, configured to, when the terminal is in an inactive state or an idle state, send a positioning wake-up indication to a base station.

Optionally, the sending the positioning wake-up indication to the base station includes:
sending the positioning wake-up indication to the base station, through one of a preset configuration resource, a random access process and a dedicated signaling;
where the preset configuration resource is an exclusive resource configured by the base station for the terminal, or the preset configuration resource is an exclusive resource broadcasted by the base station.

Optionally, the first sending unit sending the positioning wake-up indication to the base station through the preset configuration resource includes one of the following:
sending the positioning wake-up indication to the base station, by sending a preset preamble at a preset opportunity on a physical random access channel (PRACH);
sending the positioning wake-up indication to the base station, by sending a Message 1 or a Message A of the random access process by sending a preset preamble at a preset opportunity on a PRACH.

Optionally, the first sending unit sending the positioning wake-up indication to the base station through the random access process includes:
through a Message 3 in a four-step random access process, or a Message A in a two-step random access process, sending the positioning wake-up indication to the base station, where the positioning wake-up indication is configured to request the base station to allocate an uplink positioning resource for the terminal.

Optionally, the positioning device further includes a first receiving unit:
where after the first sending unit sends the positioning wake-up indication, the first receiving unit is configured to:
receive a preset uplink positioning resource which is configured by the base station for the terminal to send an uplink positioning signal;
where the preset uplink positioning resource includes a Sounding Reference Signal (SRS) configuration resource and/or a Physical Random Access Channel (PRACH) configuration resource.

Optionally, the first receiving unit receiving the preset uplink positioning resource which is configured by the base station for the terminal to send the uplink positioning signal includes:
receiving the preset uplink positioning resource configured by the base station for the terminal, through a random access process and /or a dedicated signaling.

Optionally, when the positioning wake-up indication is sent to the base station through the Message 1 in the four-step random access process, the device further includes:
a second receiving unit, configured to receive a Message 2 sent by the base station, where the Message 2 includes an uplink positioning resource index pre-configured by the base station;
a second sending unit, configured to send a Message 3 to the base station, where the Message 3 includes the uplink positioning resource requested by the terminal according to the uplink positioning resource index;
a third receiving unit, configured to receive a Message 4 sent by the base station, where the Message 4 includes an uplink positioning resource configured by the base station for the terminal according to the uplink positioning resource requested by the terminal.

Optionally, the first sending unit is further to:
send an uplink positioning signal to the base station through a preset uplink positioning resource;
where the preset uplink positioning resource is the exclusive resource pre-configured by the base station to the terminal; or
the preset uplink positioning resource is an uplink positioning resource allocated by the base station to the terminal after the terminal sends the positioning wake-up indication to the base station.

Optionally, the uplink positioning signal includes a PRACH channel and/or an SRS signal.

Optionally, the positioning device further includes a third sending unit,
where subsequent to the receiving the uplink positioning resource configured by the base station for the terminal to send the uplink positioning signal, the third sending unit is further configured to:
send an uplink positioning request to the base station;
where the uplink positioning request is configured to request performing an uplink positioning service, and the uplink positioning request includes a S-Temporary Mobile Subscription Identifier (S-TMSI).

A positioning device is further provided in the embodiment of the present disclosure, performed by a base station and including:
an indication receiving unit configured to receive a positioning wake-up indication which is sent to the base station by a terminal in an inactive state or an idle state;
a message reporting unit, configured to send a positioning report message of the terminal to a positioning server, according to the positioning wake-up indication;
where the positioning reporting message includes a terminal identification of the terminal; or, the positioning reporting message includes a preset uplink positioning resource allocated by the base station for the terminal to send an uplink positioning signal.

Optionally, the indication receiving unit receiving the positioning wake-up indication sent by the terminal to the base station includes:
receiving the positioning wake-up indication which is sent by the terminal to the base station through one of a preset configuration resource, a random access process and a dedicated signaling;
where the preset configuration resource is an exclusive resource configured by the base station to the terminal, or the preset configuration resource is an exclusive resource broadcasted by the base station.

Optionally, the indication receiving unit receiving the positioning wake-up indication sent through the preset configuration resource includes:
receiving the positioning wake-up indication;
where the positioning wake-up indication is sent by sending a preset preamble at a preset opportunity on a physical random access channel (PRACH); or
the positioning wake-up indication is sent by sending a Message 1 or a Message A of a random access process by sending a preset preamble at a preset opportunity on a PRACH.

Optionally, the indication receiving unit receiving the positioning wake-up indication which is sent by the terminal to the base station through the random access process includes:
receiving the positioning wake-up indication which is sent by the terminal to the base station through a Message 3 in a four-step random access process or a Message A in a two-step random access process, where the positioning wake-up indication is configured to request the base station to allocate the uplink positioning resource to the terminal.

Optionally, the positioning device further includes a resource sending unit,
where subsequent to the receiving the positioning wake-up indication which is sent by the terminal to the base station through the random access process, the resource sending unit is further configured to:
send to the terminal, the preset uplink positioning resource configured for the terminal to send the uplink positioning signal, through the random access process or the dedicated signaling;
where the preset uplink positioning resource includes a Sounding Reference Signal (SRS) configuration resource and/or a Physical Random Access Channel (PRACH) configuration resource.

Optionally, the message reporting unit is further configured to:
encapsulate the preset uplink positioning resource configured for the terminal, and send the encapsulated preset uplink positioning resource to a core network.

Optionally, the positioning device further includes a responding unit, where when the positioning wake-up indication sent by the terminal is received through the Message 1 in the random access process, the responding unit is configured to:
in response to the Message 1, send a Message 2 to the terminal, where the Message 2 includes an uplink positioning resource index pre-configured by the base station;
receive a Message 3 sent by the terminal, where the Message 3 includes the uplink positioning resource requested by the terminal according to the uplink positioning resource index;
send a Message 4 to the terminal, where the Message 4 includes an uplink positioning resource configured by the base station for the terminal according to the uplink positioning resource requested by the terminal.

Optionally, the positioning device further includes:
a signal sending unit, configured to receive an uplink positioning signal which is sent by the terminal to the base station through the preset uplink positioning resource;
where the preset uplink positioning resource is an exclusive resource pre-configured by the base station for the terminal; or
the preset uplink positioning resource is an uplink positioning resource allocated by the base station for the terminal after the terminal sends the positioning wake-up indication to the base station.

Optionally, the uplink positioning signal includes a PRACH channel and/or an SRS signal.

Optionally, the positioning device further includes:
a configuring unit, configured to send resource configuration information to the terminal through the dedicated signaling;
the resource configuration information includes the preset configuration resource and/or preset uplink positioning resource used for sending the uplink positioning signal;
where different terminals correspond to different preset configuration resources and different preset uplink positioning resources.

Optionally, subsequent to the sending resource configuration information to the terminal, the message reporting unit is further configured to:
send a resource association indication information to a positioning server; where the resource association indication information records an association relationship between the preset uplink positioning resource and the terminal identification of the terminal.

Optionally, the message reporting unit is further configured to:
send a candidate resource for sending the uplink positioning signal in a current cell to the positioning server;
obtain a recommended resource which is sent by the positioning server based on candidate resources of multiple base stations;
determine a preconfigured uplink positioning resource according to the recommended resource; and
broadcast the uplink positioning resource.

Optionally, the positioning device further includes:
a broadcasting unit, configured to broadcast a preset PRACH opportunity and a preset preamble for sending the positioning wake-up indication.

A positioning device is further provided in the embodiment of the present disclosure, performed by a positioning server and including:
a message receiving unit, configured to receive a positioning report message sent by a base station, where the positioning report message is used for an uplink positioning of a terminal which is in an inactive state or an idle state;
a resource determination unit, configured to determine a uplink positioning resource used for the terminal to send an uplink positioning signal, according to the positioning report message;
where the positioning report message includes a terminal identification of the terminal, and the uplink positioning resource used for the terminal to send the uplink positioning signal is determined according to a pre-recorded association between the terminal identification and the uplink positioning resource pre-configured by the base station; or
the positioning report message includes the uplink positioning resource allocated by the base station for the terminal to send an uplink positioning signal.

Optionally, the positioning device further includes:
a resource indication unit, configured to send a positioning signal indication to a neighboring base station of the base station, where the positioning signal indication includes the uplink positioning resource, and is configured to instruct the neighboring base station to use the uplink positioning resource to receive the uplink positioning signal.

A processor-readable storage medium is further provided in the embodiment of the present disclosure, where the processor-readable storage medium stores a computer program, the computer program is configured to cause the processor to execute the positioning method hereinabove.

The beneficial effects of the above technical solutions of the present disclosure are as follows:
According to the positioning method described in the embodiment of the present disclosure, the terminal in the inactive state or idle state can send a positioning wake-up indication to the base station, that is, indicating the uplink positioning in the inactive state or idle state through a signal, to notify the base station to start uplink positioning, thereby solving the problem of positioning the terminal in the inactive/idle state.

### BRIEF DESCRIPTION OF THE DRAWINGS

Fig. 1 is a schematic flowchart of embodiment 1 of the positioning method according to the embodiment of the present disclosure;
Fig. 2 is a first flowchart of the positioning method according to the embodiment of the present disclosure;
Fig. 3 is a second flowchart of the positioning method according to the embodiment of the present disclosure;
Fig. 4 is a third flowchart of the positioning method according to the embodiment of the present disclosure;
Fig. 5 is a fourth flowchart of the positioning method according to the embodiment of the present disclosure;
Fig. 6 is a fifth flowchart of the positioning method according to the embodiment of the present disclosure;
Fig. 7 is a schematic flowchart of embodiment 2 of the positioning method according to the embodiment of the present disclosure;
Fig. 8 is a schematic flowchart of embodiment 3 of the positioning method according to the embodiment of the present disclosure;
Fig. 9 is a schematic structural view of a terminal according to the embodiment of the present disclosure;
Fig. 10 is a schematic structural view of a base station according to the embodiment of the present disclosure;
Fig. 11 is a schematic structural view of a positioning server according to the embodiment of the present disclosure;
Fig. 12 is a first schematic structural view of the positioning device according to the embodiment of the present disclosure;
Fig. 13 is a second schematic structural view of the positioning device according to the embodiment of the present disclosure; and
Fig. 14 is a third schematic structural view of the positioning device according to the embodiment of the present disclosure.

### DETAILED DESCRIPTION

In the present disclosure, the term "and/or" describes the association relationship of associated objects, indicating that there can be three relationships, for example, A and/or B, which can mean: A exists alone, A and B exist simultaneously, and B exists alone. The character "/" generally indicates that the related objects are in an "or" relationship.

In the embodiments of the present disclosure, the term "plurality" refers to two or more than two, and other quantifiers are similar to it.

The embodiments of the present disclosure will be clearly and completely described below with reference to the accompanying drawings in the embodiments of the present disclosure. Obviously, the described embodiments are only some of the embodiments of the present disclosure, not all of them. Based on the embodiments in this disclosure, all other embodiments obtained by those of ordinary skill in the art without creative efforts fall within the scope of protection of this disclosure.

The technical solution provided by the embodiments of the present disclosure can be applied to a variety of systems, especially 5G systems. For example, applicable systems may be global system of mobile communication (GSM) system, code division multiple access (code division multiple access, CDMA) system, wideband code division multiple access (Wideband Code Division Multiple Access, WCDMA) general packet Wireless service (general packet radio service, GPRS) system, long term evolution (long term evolution, LTE) system, LTE frequency division duplex (FDD) system, LTE time division duplex (TDD) system, Long term evolution advanced (LTE-A) system, universal mobile telecommunication system (UMTS), worldwide interoperability for microwave access (WiMAX) system, 5G New Radio, NR) system, etc. These various systems include terminal equipment and network equipment. The system can also include the core network part, such as the Evolved Packet System (EPS), 5G system (5GS), etc.

In order to solve the problem in the related art that terminals perform uplink positioning always in the connected state, and cannot be applied to the inactive or idle state, embodiments of the present disclosure provide a positioning method, when the terminal is in the inactive state or the idle state, by sending a positioning wake-up indication, the uplink positioning in the inactive state or idle state is started, to obtain uplink positioning resource.

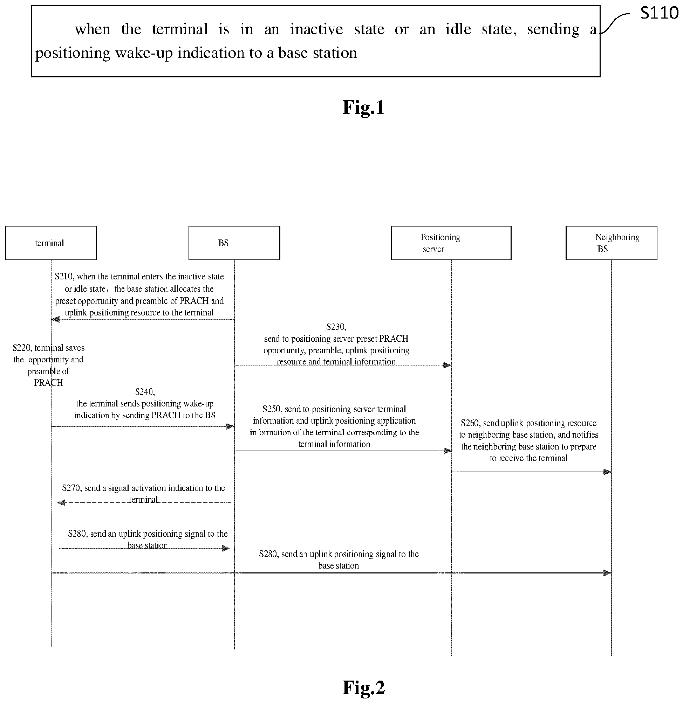

One embodiment of the present disclosure provides a positioning method, which is performed by a terminal. As shown in Fig. 1, the method includes:
S110: when the terminal is in an inactive state or an idle state, sending a positioning wake-up indication to a base station.

According to the positioning method described in the embodiment of the present disclosure, the terminal in the inactive state or idle state can send a positioning wake-up indication to the base station, that is, indicating the uplink positioning in the inactive state or idle state through a signal, to notify the base station to start uplink positioning.

In the embodiment of the present disclosure, optionally, in step S110, sending a positioning wake-up indication to the base station includes:
sending the positioning wake-up indication to the base station, through one of a preset configuration resource, a random access process and a dedicated signaling;
where the preset configuration resource is an exclusive resource configured by the base station for the terminal, or the preset configuration resource is an exclusive resource broadcasted by the base station.

Optionally, when the terminal is still in the cell where the serving base station is located when it is released from the connected state, the serving base station allocates dedicated resources for positioning wake-up to the terminal, and the terminal sends a positioning wake-up indication to the serving base station through the dedicated resources; or, by The base station broadcasts its own dedicated resources for positioning wake-up, and the terminal sends a positioning wake-up indication to the base station.

Through this embodiment, the terminal uses resources dedicated to positioning wake-up as a positioning wake-up indication to notify the base station to enable uplink positioning of the terminal.

Optionally, the preset configuration resource may be to send a preamble code at a preset opportunity of a Physical Random Access Channel (Physical Random Access Channel, PRACH).

In the embodiment of the present disclosure, optionally, sending a positioning wake-up indication to the base station through preset configuration resource includes one of the following:
sending the positioning wake-up indication to the base station, by sending a preset preamble at a preset opportunity on a physical random access channel (PRACH);
sending the positioning wake-up indication to the base station, by sending a Message 1 or a Message A of the random access process by sending a preset preamble at a preset opportunity on a PRACH;
sending the positioning wake-up indication to the base station through a dedicated signaling.

A positioning wake-up indication is sent to the base station through dedicated signaling.

Optionally, sending a positioning wake-up indication to the base station through dedicated signaling includes, but is not limited to, sending a positioning wake-up indication through at least one of the following information :
terminal identification, terminal application positioning type and wake-up type.

Optionally, the wakeup type includes periodic wakeup, event wakeup, etc.

Optionally, sending a positioning wake-up indication to the base station by sending a preset preamble at a preset opportunity of PRACH, includes:
when the terminal is released from the connected state by the base station and enters the inactive state or idle state, such as when the base station sends a connection release message to the terminal, the base station allocates the preset opportunity and preamble of PRACH to the terminal for the terminal to send positioning wake-up indications, or

The base station broadcasts exclusive resource for positioning wake-up in the cell. When the terminal needs to send uplink positioning signals in the inactive state or idle state, it first receives the system message, to obtain optional resource for applying positioning service in the cell, i.e., for sending positioning wake-up indication.

Optionally, when the base station is the base station that the terminal was connected to before entering the inactive state or the idle state, when the terminal is released from the connected state by the base station and enters the inactive state or the idle state, such as the base station sending a connection release message to the terminal, the base station allocates the preset opportunity and preamble of PRACH to the terminal for the terminal to send positioning wake-up indications; optionally, the base station also allocates preset uplink positioning resource to the terminal for the terminal to send uplink positioning signals.

In this embodiment, when the base station is the base station connected to the terminal before entering the inactive state or the idle state, the terminal sends a preset preamble on the preset opportunity of PRACH and sends a positioning wake-up indication to the base station.

Further, the base station saves the preset opportunity and preamble of PRACH assigned to the terminal, and saves the terminal information of the terminal, such as the terminal identification, after receiving the preset preamble sent by the terminal at the preset opportunity of PRACH, the base station determines that it has received the positioning wake-up indication sent by the terminal according to the association between the saved terminal identification and the corresponding preset opportunity and preamble of the PRACH.

Further, optionally, the base station sends to the positioning server the preset opportunity and preamble of the PRACH allocated to the terminal for sending the positioning wake-up indication, the preset uplink positioning resource for sending the uplink positioning signal, and the terminal identification.

In addition, the base station sends a positioning report message of the terminal to the positioning server according to the received positioning wake-up indication. The positioning report message includes a terminal identifier for the terminal's application for an uplink positioning signal. The positioning server determines the corresponding preset uplink positioning resource according to the received terminal identification, sends the determined preset uplink positioning resource to at least one neighboring base station of the base station, and notifies the at least one neighboring base station to prepare to receive the information sent by the terminal. Uplink positioning signal.

On this basis, the base station and adjacent base stations begin to prepare to receive the uplink positioning signal sent by the terminal.

According to this embodiment, the preset configuration resource allocated to the terminal by the serving base station for sending positioning wake-up indications and the preset uplink positioning resource for sending uplink positioning signals are used to make the preset configuration resource and the preset uplink positioning resource Corresponds one-to-one with the terminals in the cell where the base station is located, and can skip the steps required under the relevant mechanism to first perform random access, then establish a connection between the terminal and the core network, and finally send the uplink positioning signal through the core network interaction. The source does not move when the terminal Under the premise of a base station, it efficiently completes the transmission and reception of uplink positioning signals for terminals in inactive or idle states, improves the positioning efficiency of terminals in inactive or idle states, greatly reduces power consumption, and reduces latency. And reduce many signaling processes.

In another embodiment, the base station broadcasts its own dedicated resources for positioning wake-up, specifically:
Each cell of the base station divides the preset opportunity and preamble of the positioning-specific PRACH for the terminal to apply for positioning services, that is, to send positioning wake-up indications;
the base station broadcasts the preset opportunity and preamble of the PRACH that is exclusive to the assigned positioning;
when the terminal needs to send uplink positioning signals in the inactive state or idle state, it first receives system messages and obtains optional resources for applying for positioning services in the cell, that is, for sending positioning wake-up indications.

According to this embodiment, optionally, sending a positioning wake-up indication to the base station through preset configuration resource includes:
by sending a preset preamble at a preset opportunity of the PRACH to send Message 1 or Message A of the random access process, sending a positioning wake-up indication sent to the base station.

Specifically, when using the four-step random access method, the terminal uses the preset PRACH and preset preamble broadcasted by the base station that are specifically used to send positioning wake-up indications to send Message 1;
According to the received Message 1, the base station determines that the received Message 1 is a positioning wake-up indication sent by one of the terminals through the preset PRACH and the preset preamble;
Further, the base station may send Message 2 to the terminal based on the received Message 1. Optionally, the Message 2 includes the uplink positioning resource index pre-configured by the base station;
The terminal sends Message 3 to the base station according to the received Message 2. The Message 3 includes the uplink positioning resource requested by the terminal according to the uplink resource positioning index;
The base station sends Message 4 to the terminal according to the received Message 3, where the Message 4 includes the uplink positioning resource configured by the base station for the terminal according to the uplink positioning resource requested by the terminal.
When using the two-step random access method, the terminal uses the preset PRACH and preset preamble broadcasted by the base station specifically for sending positioning wake-up indications to send Message A;
According to the received Message A, the base station determines that the received Message A is a positioning wake-up indication sent by one of the terminals through the preset PRACH and the preset preamble;

According to the Message A, the base station sends message B to the terminal. The Message 2 includes the uplink positioning resource configured for the terminal.

Optionally, the uplink positioning resource include at least one of SRS signal configuration, PRACH channel configuration, SRS signal index and PRACH channel index.

In another embodiment of the present disclosure, sending a positioning wake-up indication to the base station through a random access process includes: in Message 3 of the four-step random access process, or in Message A of the two-step random access process, sending a positioning wake-up indication to the base station. Send a positioning wake-up indication, where the positioning wake-up indication is configured to request the base station to allocate uplink positioning resource to the terminal.

In this embodiment, taking the four-step random access method as an example, the terminal uses the four-step random access method to complete uplink positioning, which specifically includes:
The terminal sends Message 1 according to the PRACH resources configured in the system message;
After receiving Message 1, the base station sends Message 2;

The terminal sends Message 3 to the base station, and Message 3 includes at least one of the following:
Terminal information, such as terminal identity information (Identity document, ID) or terminal identification;
Positioning wake-up indication is configured to request the terminal to allocate uplink positioning resource, such as SRS resources or PRACH channel resources.

The base station sends Message 4 to the terminal according to the received Message 3. Optionally, the Message 4 includes the uplink positioning resource allocated by the base station to the terminal, such as SRS signal configuration and/or PRACH channel configuration.

According to this embodiment, the terminal sends a positioning wake-up indication to the base station using a four-step random access process, and receives the uplink positioning resource allocated by the base station to the terminal.

In this embodiment, taking the two-step random access method as an example, the terminal uses the two-step random access method to complete uplink positioning, which specifically includes:
The terminal sends Message A according to the PRACH resources configured in the system message; and the Message A includes:
Terminal information, such as terminal identity information ID and/or terminal identification;
Positioning wake-up indication is configured to request the terminal to allocate uplink positioning resource, such as SRS resources or PRACH channel resources.

The base station sends message B to the terminal according to the received Message A, and the message B includes the uplink positioning resource allocated by the base station to the terminal, such as SRS signal configuration and/or PRACH channel configuration.

According to this embodiment, the terminal sends a positioning wake-up indication to the base station using a two-step random access process, and receives the uplink positioning resource allocated by the base station to the terminal.

In the embodiment of the present disclosure, after sending the positioning wake-up indication, the method further includes:
receiving uplink positioning resource configured by the base station for the terminal to send uplink positioning signals;
where the uplink positioning resource include SRS signal configuration resources and/or PRACH channel configuration resources.

Optionally, the SRS signal configuration resource includes SRS resource configuration and/or SRS index; the PRACH channel configuration resource includes PRACH channel configuration and/or PRACH channel index.

Optionally, after sending the positioning wake-up indication through a random access process or dedicated signaling, the uplink positioning resource configured by the base station for the terminal are used for uplink positioning signal transmission.

Optionally, the uplink positioning resource configured by the base station for the terminal are received through a random access process and/or dedicated signaling.

Optionally, the uplink positioning resource configured for the terminal by the receiving base station through dedicated signaling include:
When the base station sends a connection release message to the terminal, the base station allocates uplink positioning resource to the terminal; or
Uplink positioning resources are directly configured for the terminal through dedicated resource configuration signaling.

Optionally, after sending the positioning wake-up indication to the base station through Message 3 of the random access process, receive the uplink positioning resource allocated by the base station for the terminal through Message 4; after sending the positioning wake-up indication to the base station through Message A, receive it through message B Uplink positioning resources allocated by the base station to the terminal.

In the embodiment of the present disclosure, after sending a positioning wake-up indication to the base station, and receiving the uplink positioning resource configured by the base station for the terminal to send uplink positioning signals, the method further includes:
Using preset uplink positioning resource, send uplink positioning signals to the base station;
where the preset uplink positioning resource is exclusive resource pre-configured by the base station to the terminal; or
the preset uplink positioning resource is uplink positioning resource allocated by the base station to the terminal after the terminal sends a positioning wake-up indication to the base station.

Optionally, in the positioning method, the uplink positioning signal includes a PRACH channel and/or an SRS signal.

In one embodiment, optionally, when the base station is the serving base station connected to the terminal before entering the inactive state or idle state, the serving base station pre-allocates the preset uplink positioning resource to the terminal for the terminal to send the Uplink positioning signal.

In another embodiment, optionally, when the base station is another base station connected to the terminal before entering the inactive state or idle state, the base station allocates the preset uplink positioning resource to the terminal after receiving the positioning wake-up indication sent by the terminal to send uplink positioning signals.

In the embodiment of the present disclosure, optionally, after receiving the uplink positioning resource configured by the base station for the terminal to send uplink positioning signals, the method further includes:
sending an uplink positioning request to the base station;
The uplink positioning request is configured to request performing an uplink positioning service, and the uplink positioning request includes a temporary mobile subscriber identity (S-Temporary Mobile Subscription Identifier, S-TMSI).

Optionally, the uplink positioning request is sent through a Radio Resource Control (Radio Resource Control, RRC) request, including S-TMSI and information requesting execution of the upper positioning service, such as the reason for establishing the request (to continue the uplink positioning service) and the corresponding network Access service (Network Access Server, NAS) information, etc., so that the base station can establish a connection with the core network for the terminal and be used for the uplink positioning of the terminal. In the positioning method described in the embodiments of the present disclosure, when the terminal starts sending uplink positioning signals, it uses the preset opportunity and preamble of the PRACH assigned by the base station to send a positioning wake-up indication to the base station, which is configured to notify the base station that it is about to start sending uplink positioning signals..

Optionally, the sent uplink positioning signal includes an SRS signal and/or a PRACH channel.

Optionally, when the uplink positioning signal sent by the terminal is an SRS signal, the base station broadcasts candidate resources for sending SRS signals in the inactive state or idle state in the system message, and the base station sends the SRS resources broadcast by the cell in advance to the location server.

When the uplink positioning signal sent by the terminal is a PRACH channel, the base station pre-divides the PRACH channel resources used for the uplink positioning signal in this cell and sends it to the positioning server.

When the terminal sends an uplink positioning signal in the inactive state or idle state, the terminal first sends a positioning wake-up indication. For example, by sending a preset preamble at the preset opportunity of PRACH, after the base station receives the positioning wake-up indication, it determines that the terminal is about to send uplink positioning signal.

In the embodiment of the present disclosure, optionally, the terminal uses preset uplink positioning resource to send uplink positioning signals to the base station. The preset uplink positioning resource may be exclusive resource preconfigured by the base station for the terminal, or may be indicated by the base station in a broadcast message. The pre-configured resource pool, after the base station receives the positioning wake-up indication sent by the terminal, allocates uplink positioning resource to the terminal according to the broadcasted resource pool.

In the embodiment of the present disclosure, optionally, the preset uplink positioning resource allocated by the base station to the terminal are sent to the core network through a New Radio (NR) Positioning Protocol A (NRPPa) container (container), such as to a positioning server, and the core network receives After configuring the preset uplink positioning resource for the terminal, the preset uplink positioning resource are sent to other base stations for each base station to receive uplink positioning signals.

In the embodiment of the present disclosure, the prerequisites for performing positioning in the above embodiments may be but are not limited to: the location service (Location Service, LCS) request of the application layer has been sent to the positioning server, and the terminal has established contact with the positioning server., the terminal is released into the inactive state or idle state, but the LCS request does not complete the response.

Specific embodiments using the positioning method described in the present disclosure are illustrated below.

### Embodiment 1

In the first embodiment, taking the cell where the terminal is still in the serving base station that is released from the connected state to the idle state or inactive state as an example, in the delayed (deferred) mobile terminal location request (Mobile Terminated Location Request, MT-LR) service Or in the Mobile Originated Location Request (MO-LR) service, the application scenario needs to determine the terminal location.

Specifically, in this embodiment, as shown in Fig. 2, the specific implementation process of the terminal performing uplink positioning includes the steps:
S210, when the terminal is released from the connected state by the base station and enters the inactive state or idle state, such as when the base station sends a connection release message to the terminal, the base station allocates the preset opportunity and preamble of PRACH to the terminal for the terminal to send positioning wake-up indication; optionally, the base station also allocates preset uplink positioning resource to the terminal for the terminal to send uplink positioning signals;
S220: The terminal saves the preset opportunity and preamble of the PRACH assigned to the terminal, and saves the terminal information of the terminal, such as the terminal identification;
S230 : The base station sends to the positioning server the preset PRACH opportunity and preamble of the physical random access channel allocated to the terminal for sending positioning wake-up indications, the preset uplink positioning resource for sending uplink positioning signals, and terminal information;
S240: When the serving base station prepares to send an uplink positioning signal, the terminal sends the preset opportunity and preamble of the PRACH configured to the terminal in step S210, that is, sends the PRACH to the base station, and notifies the base station through the positioning wake-up indication that the terminal is ready to send uplink positioning signals;
S250, the base station determines that it has received the positioning wake-up indication sent by the terminal according to the association between the saved terminal identification and the corresponding preset PRACH opportunity and preset preamble of the physical random access channel; and, sends to the positioning server the terminal information and the uplink positioning application information of the terminal corresponding to the terminal information;
S260: The positioning server determines the corresponding preset uplink positioning resource according to the received terminal identification, sends the determined preset uplink positioning resource to at least one neighboring base station of the base station, and notifies the at least one neighboring base station to prepare to receive the terminal. The uplink positioning signal sent causes the serving base station and the neighboring base stations of the serving base station to start preparing to receive the uplink positioning signal sent by the terminal;
S270. The serving base station sends a signal activation indication to the terminal for activating the uplink positioning resource configured for the terminal. This step is an optional step. When the uplink positioning signal needs to be activated, the serving base station sends the signal activation indication to the terminal;
S280: The terminal uses the preset uplink positioning resource allocated by the base station to the terminal in step S210 to send an uplink positioning signal to the base station; optionally, the uplink positioning signal may include, but is not limited to, only a PRACH signal and/or a dedicated SRS signal., the PRACH signal may include the preset opportunity and preamble of the PRACH.

According to this embodiment, the preset configuration resources allocated to the terminal by the serving base station for sending positioning wake-up instructions and the preset uplink positioning resources for sending uplink positioning signals are used to make the preset configuration resources and the preset uplink positioning resources corresponds one-to-one with the terminals in the cell where the base station is located, and can skip the steps required in the relevant mechanism to first perform random access, then establish a connection between the terminal and the core network, and finally send the uplink positioning signal through the core network interaction. Under the premise that the terminal does not move out from the source base station, it efficiently completes the transmission and reception of uplink positioning signals for terminals in inactive or idle states, improves the positioning efficiency of terminals in inactive or idle states, greatly reduces power consumption, and reduces latency and reduce many signaling processes.

In the following embodiment, the present disclose will be described taking an example that the terminal leaves the cell of the serving base station connected in the connected state after entering the idle state or inactive state, in the deferred MT-LR scenario, it needs to transmit uplink positioning signal through other base stations other than the serving base station.

### Embodiment 2

In this embodiment, optionally, the base station determines and broadcasts candidate resources that can send uplink positioning signals in the inactive or idle state of the cell. The specific process includes:
The base station first allocates candidate resources that inactive or idle terminals in the cell can use as uplink positioning signals. The candidate resources can be one or more combinations of the following resources:
single or multiple SRS physical resource configuration and index identification.

PRACH channel resources, optionally, may include PRACH opportunity and preset preamble.

Each base station sends the allocated candidate resources to the positioning server and informs the candidate uplink positioning resource of its cell.

The positioning server collects the candidate uplink positioning resource sent by each base station and coordinates them to stagger the allocation of resources between neighboring cells. When the positioning server finds that candidate uplink positioning resource between neighboring cells conflict, optionally, the positioning server sends a configuration recommendation request to each base station.

Optionally, after receiving the configuration recommendation request sent by the positioning server, each base station updates the uplink positioning resource configuration of the base station, and replies to the positioning server, notifying that it accepts the uplink positioning resource recommended by the positioning server.

Further, the base station broadcasts the above coordinated candidate uplink positioning resource in the system message;
When the terminal needs to send uplink positioning signals in the inactive state or idle state, it receives the system message and obtains the candidate uplink positioning resource preconfigured in the cell.

### Embodiment 3

In this embodiment, the base station broadcasts the dedicated resources for positioning wake-up in the current cell, specifically:
Each cell of the base station divides the preset opportunity and preamble of the positioning-specific PRACH for the terminal to apply for positioning services, that is, to send positioning wake-up indications;
The base station broadcasts the preset opportunity and preamble of the PRACH that is exclusive to the positioning;

When the terminal needs to send uplink positioning signals in the inactive state or idle state, it first receives system messages and obtains optional resources for applying for positioning services in the cell, that is, for sending positioning wake-up indications.

### Embodiment 4

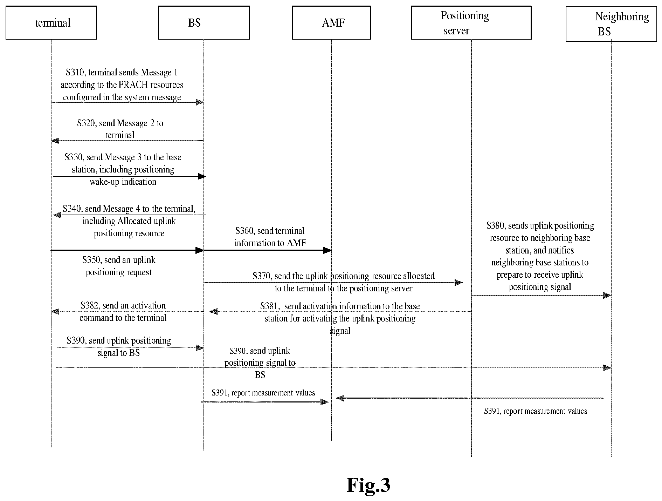

In this embodiment, the terminal uses a four-step random access method to complete the uplink positioning of the terminal in the inactive state or idle state. As shown in Fig. 3, the specific implementation process includes:
S310: The terminal sends Message 1 according to the PRACH resources configured in the system message;
S320: After receiving Message 1, the base station sends Message 2 to the terminal; the sending process of Message 1 and Message 2 is the same as the sending process of Message 1 and Message 2 in the four-step random access of the related technology;
S330. The terminal sends Message 3 to the base station. Message 3 includes at least one of the following:
   Terminal information, such as terminal identity information ID and/or terminal identification;
   Positioning wake-up indication is configured to request the terminal to allocate uplink positioning resource, such as SRS resources or PRACH channel resources.
S340. The base station sends Message 4 to the terminal according to the received Message 3. The Message 4 includes the uplink positioning resource allocated by the base station to the terminal, such as SRS signal configuration and/or PRACH channel configuration;
   Optionally, the Message 4 also includes at least one of a terminal contention resolution identifier and a Cell Radio Network Temporary Identifier (C-RNTI).
S350: The terminal sends an uplink positioning request, which may be an RRC request, including S-TMSI and information requesting execution of the upper positioning service, such as the reason for establishing the request (to continue the uplink positioning service) and the corresponding NAS information, so that the base station establishes a connection with the core network for the terminal for uplink positioning of the terminal;
S360, the base station establishes a connection with the core network according to the received uplink positioning request, and sends the terminal information to the access and mobility management function (AMF) unit of the core network;
S370, the base station sends the uplink positioning resource allocated to the terminal to the positioning server; specifically, the base station encapsulates the uplink positioning resource in the container and sends them to the positioning server through the AMF;
S380: The positioning server sends the uplink positioning resource of the terminal to the neighboring base stations of the base station, and notifies the neighboring base stations to prepare to receive uplink positioning signals;
S390: After receiving Message 4, the terminal sends an uplink positioning signal on the uplink positioning resource allocated by the base station to the terminal;
S391: The base station and adjacent base stations receive the uplink positioning signal, complete the uplink positioning signal measurement and report the relevant measurement values to the core network.

### Embodiment 5

In this embodiment, the terminal uses a four-step random access method to send a semi-persistent positioning signal in the inactive state or idle state to complete the uplink positioning of the terminal.

Specifically, this embodiment includes steps S310 to S380 of Embodiment 4. On the basis of steps S310 to S380, when the uplink positioning signal is a semi-persistent signal that needs to be activated, the positioning server sends the uplink positioning signal of the terminal to the neighboring base stations of the base station, and the neighboring base stations are notified to prepare to receive uplink positioning signals, as shown in Figure 3, further steps are included:
S381, the positioning server sends activation information to the base station for activating the uplink positioning signal;
S382: the base station activates the uplink positioning signal at the expected time and sends an activation command to the terminal.

After receiving the activation command, the terminal sends an uplink positioning signal on the uplink positioning resource allocated by the base station to the terminal, that is, step S390 is performed.

In the above-mentioned Embodiment 4 to Embodiment 5, the terminal initiates random access according to the PRACH resources configured in the system message, and the positioning wake-up indication (used to request positioning signal configuration) is carried through Message 3. This method can reduce the consumption of dedicated resources.

### Embodiment 6

In this embodiment, compared with Embodiments 4 to 5, a dedicated random access resource configuration is configured to send positioning wake-up indications. The dedicated random access resource configuration is displayed and notified to the terminal in the manner shown in Embodiment 3, which can reduce information interaction, improve positioning efficiency, reduce positioning delay and terminal power consumption.

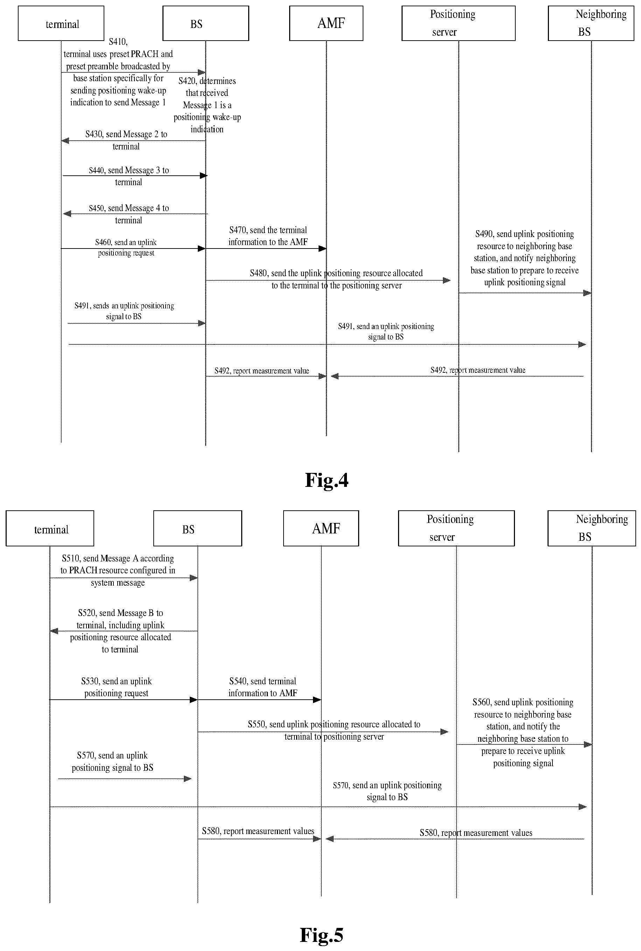

Specifically, using the positioning method of this embodiment, the terminal uses a four-step random access method to complete the uplink positioning of the terminal in the inactive state or idle state, as shown in Fig. 4. The specific implementation process includes:
S410, the terminal uses the preset PRACH and preset preamble broadcasted by the base station specifically for sending positioning wake-up indications to send Message 1;
S420: Based on the received Message 1, the base station determines that the received Message 1 is a positioning wake-up indication sent by one of the terminals through the preset PRACH and the preset preamble;
S430: Based on the received Message 1, the base station sends Message 2 to the terminal. Optionally, the Message 2 includes an uplink positioning resource index pre-configured by the base station; where, the determination method of the pre-configured uplink positioning resource index can refer to the implementation. The method described in Example 2;

Optionally, Message 2 may also include at least one of the following information:
Timing Advance (TA);
Message 3 resource configuration;
Random Access RNTI (Random Access RNTI, RA-RNTI);

The optional terminal is used for resource configuration of uplink positioning signals.

S440: The terminal sends Message 3 to the base station according to the received Message 2; optionally, Message 3 includes at least one of the following information:
Terminal information, including terminal identity information and/or terminal identification;
Relevant information about the source service base station;
The uplink positioning resource requested according to the uplink resource positioning index; where, if the resources allocated in step S430 are inappropriate, the Message 3 sent to the base station includes the uplink positioning resource requested by the terminal, and the uplink positioning resource include SRS resources and/or PRACH resources;

S450: The base station sends Message 4 to the terminal according to the received Message 3. Optionally, the Message 4 includes at least one of the following information:
Terminal competition resolution logo;
C-RNTI;

The base station configures uplink positioning resource for the terminal according to the uplink positioning resource requested by the terminal.
S460: The terminal sends an uplink positioning request, which may be an RRC request, including S-TMSI and information requesting execution of the upper positioning service, such as the reason for establishing the request (to continue the uplink positioning service) and the corresponding NAS information, so that the base station establish a connection with the core network for the terminal for uplink positioning of the terminal;
S470: the base station establishes a connection with the core network based on the received uplink positioning request, and sends the terminal information to the AMF of the core network;
S480, the base station sends the uplink positioning resource allocated to the terminal to the positioning server; specifically, the base station encapsulates the uplink positioning resource in the container and sends them to the positioning server through the AMF;
S490: The positioning server sends the uplink positioning resource of the terminal to the neighboring base stations of the base station, and notifies the neighboring base stations to prepare to receive uplink positioning signals;
S491: After receiving Message 4, the terminal sends an uplink positioning signal on the uplink positioning resource allocated by the base station to the terminal;
S492: The base station and adjacent base stations receive the uplink positioning signal, complete the uplink positioning signal measurement and report the relevant measurement values to the core network.

### Embodiment 7

In this embodiment, the terminal uses a two-step random access method to complete the uplink positioning of the terminal in the inactive state or idle state. As shown in Fig. 5, the specific implementation process includes:
S510: The terminal sends Message A according to the PRACH resource configured in the system message; optionally, Message A includes at least one of the following information:
   Terminal information, such as terminal identity information ID and/or terminal identification;
   Positioning wake-up indication is configured to request the terminal to allocate uplink positioning resource, such as SRS resources or PRACH channel resources.
S520: The base station feeds back message B to the terminal based on the received Message A. The message B includes at least one of the following information:
   Terminal competition resolution logo;
   C-RNTI;
   Uplink positioning resources allocated by the base station to the terminal; for example, include at least one of SRS signal configuration and/or PRACH channel configuration.
S530, the terminal sends an uplink positioning request, which may be an RRC request, including S-TMSI and information requesting execution of the upper positioning service, such as the reason for establishing the request (to continue the uplink positioning service) and the corresponding NAS information, etc., so that the base station is the terminal Establish a connection with the core network for uplink positioning of the terminal;
S540, the base statin establishes a connection with the core network based on the received uplink positioning request, and sends the terminal information to the AMF of the core network;
S550, the base station sends the uplink positioning resource allocated to the terminal to the positioning server; specifically, the base station encapsulates the uplink positioning resource in the container and sends them to the positioning server through the AMF;
S560: The positioning server sends the uplink positioning resource of the terminal to the neighboring base stations of the base station, and notifies the neighboring base stations to prepare to receive uplink positioning signals;
S570: After receiving message B, the terminal sends an uplink positioning signal on the uplink positioning resource allocated by the base station to the terminal;
S580: The base station and adjacent base stations receive uplink positioning signals, complete uplink positioning signal measurement and report relevant measurement values to the core network.

### Embodiment 8

In this embodiment, compared with Embodiment 7, a dedicated random access resource configuration is configured to send positioning wake-up indications. The dedicated random access resource configuration is displayed and notified to the terminal in the manner shown in Embodiment 3, which can reduce information interaction and improve positioning efficiently, reducing positioning delay and terminal power consumption.

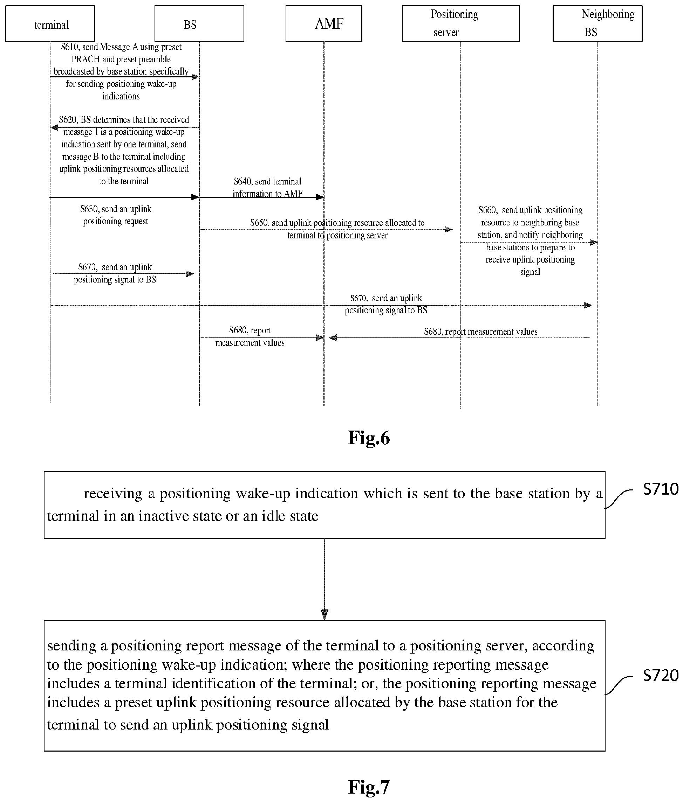

Specifically, using the positioning method of this embodiment, the terminal uses a two-step random access method to complete the uplink positioning of the terminal in the inactive state or idle state, as shown in Fig. 6. The specific implementation process includes:
S610: The terminal sends Message A using the preset PRACH and preamble broadcasted by the base station specifically for sending positioning wake-up indications;
S620: The base station receives message A sent by the terminal, and determines that the received message 1 is a positioning wake-up indication sent by one of the terminals through the preset PRACH and preamble code; and sends message B to the terminal.

Optionally, the message B includes at least one of the following messages:
Terminal competition resolution logo;
C-RNTI;
Uplink positioning resources allocated by the base station to the terminal; for example, include at least one of SRS signal configuration and/or PRACH channel configuration.
S630: The terminal sends an uplink positioning request, which may be an RRC request, including S-TMSI and information requesting execution of the upper positioning service, such as the reason for establishing the request (to continue the uplink positioning service) and the corresponding NAS information, so that the base station becomes the terminal. Establish a connection with the core network for uplink positioning of the terminal;
S640, the base station establishes a connection with the core network based on the received uplink positioning request, and sends the terminal information to the AMF of the core network;
S650, the base station sends the uplink positioning resource allocated to the terminal to the positioning server; specifically, the base station encapsulates the uplink positioning resource in the container and sends them to the positioning server through the AMF;
S660: The positioning server sends the uplink positioning resource of the terminal to the neighboring base stations of the base station, and notifies the neighboring base stations to prepare to receive uplink positioning signals;
S670: After receiving message B, the terminal sends an uplink positioning signal on the uplink positioning resource allocated by the base station to the terminal;
S680: The base station and neighboring base stations receive uplink positioning signals, complete uplink positioning signal measurement and report relevant measurement values to the core network.

An embodiment of the present disclosure also provides a positioning method, which is performed by a base station. As shown in Fig. 7, the method includes:
S710: receiving a positioning wake-up indication which is sent to the base station by a terminal in an inactive state or an idle state;
S720: sending a positioning report message of the terminal to a positioning server, according to the positioning wake-up indication;
where the positioning reporting message includes a terminal identification of the terminal; or, the positioning reporting message includes a preset uplink positioning resource allocated by the base station for the terminal to send an uplink positioning signal.

According to the embodiments of the present disclosure, when the terminal is in the inactive state or idle state, it starts the inactive state or idle state to perform uplink positioning by sending a positioning wake-up indication, and obtains uplink positioning resource; the base station sends a positioning report message to the positioning server., so that the positioning server sends corresponding uplink positioning resource to neighboring base stations to receive uplink positioning signals.

Optionally, the receiving the positioning wake-up indication sent by the terminal to the base station includes:
receiving the positioning wake-up indication which is sent by the terminal to the base station through one of a preset configuration resource, a random access process and a dedicated signaling;
where the preset configuration resource is an exclusive resource configured by the base station to the terminal, or the preset configuration resource is an exclusive resource broadcasted by the base station.

Optionally, the receiving the positioning wake-up indication sent through the preset configuration resource includes:
receiving the positioning wake-up indication;
where the positioning wake-up indication is sent by sending a preset preamble at a preset opportunity on a physical random access channel (PRACH); or
the positioning wake-up indication is sent by sending a Message 1 or a Message A of a random access process by sending a preset preamble at a preset opportunity on a PRACH.

Optionally, the receiving the positioning wake-up indication which is sent by the terminal to the base station through the random access process includes:
receiving the positioning wake-up indication which is sent by the terminal to the base station through a Message 3 in a four-step random access process or a Message A in a two-step random access process, where the positioning wake-up indication is configured to request the base station to allocate the uplink positioning resource to the terminal.

Optionally, subsequent to the receiving the positioning wake-up indication which is sent by the terminal to the base station through the random access process, the method further includes:
sending to the terminal, the preset uplink positioning resource configured for the terminal to send the uplink positioning signal, through the random access process or the dedicated signaling;
where the preset uplink positioning resource includes a Sounding Reference Signal (SRS) configuration resource and/or a Physical Random Access Channel (PRACH) configuration resource.

Optionally, the positioning method further includes:
encapsulating the preset uplink positioning resource configured for the terminal, and sending the encapsulated preset uplink positioning resource to a core network.

Optionally, when the positioning wake-up indication sent by the terminal is received through the Message 1 in the random access process, the method further includes:
in response to the Message 1, sending a Message 2 to the terminal, where the Message 2 includes an uplink positioning resource index pre-configured by the base station;
receiving a Message 3 sent by the terminal, where the Message 3 includes the uplink positioning resource requested by the terminal according to the uplink positioning resource index;
sending a Message 4 to the terminal, where the Message 4 includes an uplink positioning resource configured by the base station for the terminal according to the uplink positioning resource requested by the terminal.

Optionally, the positioning method further includes:
receiving an uplink positioning signal which is sent by the terminal to the base station through the preset uplink positioning resource;
where the preset uplink positioning resource is an exclusive resource pre-configured by the base station for the terminal; or
the preset uplink positioning resource is an uplink positioning resource allocated by the base station for the terminal after the terminal sends the positioning wake-up indication to the base station.

Optionally, the uplink positioning signal includes a PRACH channel and/or an SRS signal.

Optionally, the positioning method further includes:
sending resource configuration information to the terminal through the dedicated signaling;
the resource configuration information includes the preset configuration resource and/or preset uplink positioning resource used for sending the uplink positioning signal;
where different terminals correspond to different preset configuration resources and different preset uplink positioning resources.

Optionally, subsequent to the sending resource configuration information to the terminal, the method further includes:
sending a resource association indication information to a positioning server; where the resource association indication information records an association relationship between the preset uplink positioning resource and the terminal identification of the terminal.

Optionally, the positioning method further includes:
sending a candidate resource for sending the uplink positioning signal in a current cell to the positioning server;
obtaining a recommended resource which is sent by the positioning server based on candidate resources of multiple base stations;
determining a preconfigured uplink positioning resource according to the recommended resource; and
broadcasting the uplink positioning resource.

Optionally, the positioning method further includes:
broadcasting a preset PRACH opportunity and a preset preamble for sending the positioning wake-up indication.
the present disclosure is applied to the base station, for the specific implementation process of each of the above embodiments, please refer to the description of the positioning method applied to the terminal side, which will not be described in detail here.

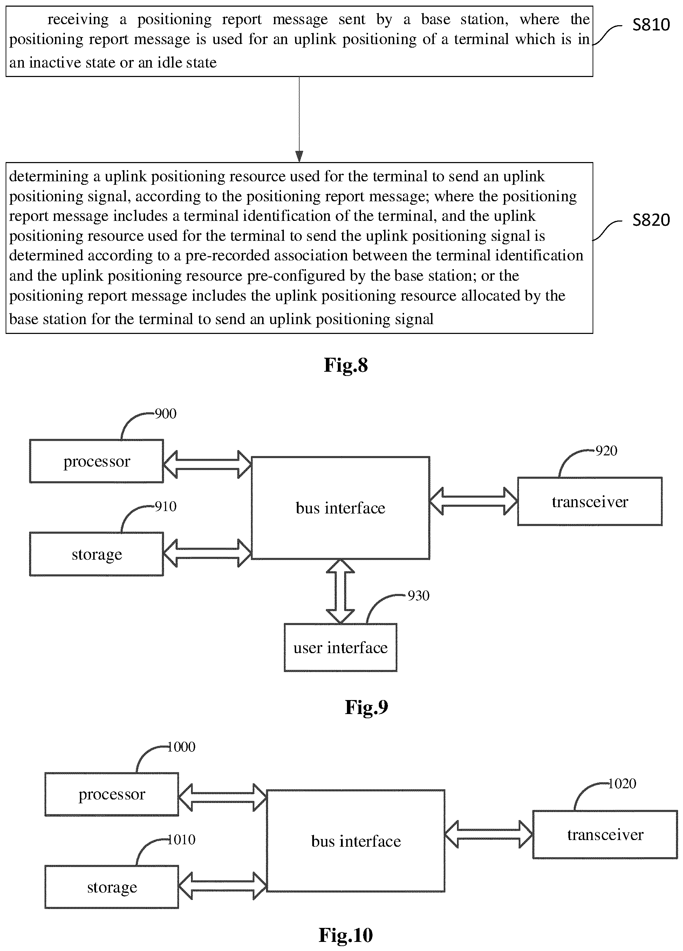

Embodiments of the present disclosure also provide a positioning method, which is performed by a positioning server. As shown in Fig. 8, the method includes:
S810. receiving a positioning report message sent by a base station, where the positioning report message is used for an uplink positioning of a terminal which is in an inactive state or an idle state;
S820: determining a uplink positioning resource used for the terminal to send an uplink positioning signal, according to the positioning report message;
where the positioning report message includes a terminal identification of the terminal, and the uplink positioning resource used for the terminal to send the uplink positioning signal is determined according to a pre-recorded association between the terminal identification and the uplink positioning resource pre-configured by the base station; or
the positioning report message includes the uplink positioning resource allocated by the base station for the terminal to send an uplink positioning signal.

Optionally, the positioning method further includes:
sending a positioning signal indication to a neighboring base station of the base station, where the positioning signal indication includes the uplink positioning resource, and is configured to instruct the neighboring base station to use the uplink positioning resource to receive the uplink positioning signal.

This embodiment of the present disclosure is applied to the positioning server, for the specific implementation process of each of the above embodiments, please refer to the description of the positioning method applied to the terminal side, which will not be described in detail here.

An embodiment of the present disclosure also provides a terminal, as shown in Fig. 9, including a storage 910, a transceiver 920, and a processor 900:
where the storage 910 is configured to store computer programs; the transceiver 920 is configured to send and receive data under a control of the processor 900; the processor 900 is configured to read the computer programs in the storage to perform:
when the terminal is in an inactive state or an idle state, sending a positioning wake-up indication to a base station.

Optionally, the sending the positioning wake-up indication to the base station includes:
sending the positioning wake-up indication to the base station, through one of a preset configuration resource, a random access process and a dedicated signaling;
where the preset configuration resource is an exclusive resource configured by the base station for the terminal, or the preset configuration resource is an exclusive resource broadcasted by the base station.

Optionally, the sending the positioning wake-up indication to the base station through the preset configuration resource includes one of the following:
sending the positioning wake-up indication to the base station, by sending a preset preamble at a preset opportunity on a physical random access channel (PRACH);
sending the positioning wake-up indication to the base station, by sending a Message 1 or a Message A of the random access process by sending a preset preamble at a preset opportunity on a PRACH.

Optionally, the sending the positioning wake-up indication to the base station through the random access process includes:
through a Message 3 in a four-step random access process, or a Message A in a two-step random access process, sending the positioning wake-up indication to the base station, where the positioning wake-up indication is configured to request the base station to allocate an uplink positioning resource for the terminal.

Optionally, subsequent to the sending the positioning wake-up indication, the processor is further configured to perform:
receiving a preset uplink positioning resource which is configured by the base station for the terminal to send an uplink positioning signal;
where the preset uplink positioning resource includes a Sounding Reference Signal (SRS) configuration resource and/or a Physical Random Access Channel (PRACH) configuration resource.

Optionally, the receiving the preset uplink positioning resource which is configured by the base station for the terminal to send the uplink positioning signal includes:
receiving the preset uplink positioning resource configured by the base station for the terminal, through a random access process and /or a dedicated signaling.

Optionally, when the positioning wake-up indication is sent to the base station through the Message 1 in the four-step random access process, the processor is further configured to perform:
receiving a Message 2 sent by the base station, where the Message 2 includes an uplink positioning resource index pre-configured by the base station;
sending a Message 3 to the base station, where the Message 3 includes the uplink positioning resource requested by the terminal according to the uplink positioning resource index;
receiving a Message 4 sent by the base station, where the Message 4 includes an uplink positioning resource configured by the base station for the terminal according to the uplink positioning resource requested by the terminal.

Optionally, the processor is further configured to perform:
sending an uplink positioning signal to the base station through a preset uplink positioning resource;
where the preset uplink positioning resource is the exclusive resource pre-configured by the base station to the terminal; or
the preset uplink positioning resource is an uplink positioning resource allocated by the base station to the terminal after the terminal sends the positioning wake-up indication to the base station..

Optionally, in the terminal, the uplink positioning signal includes a PRACH channel and/or an SRS signal.

Optionally, in the terminal, after receiving the uplink positioning resource configured by the base station for the terminal for transmitting uplink positioning signals, the processor 900 is further configured to:
send an uplink positioning request to the base station;
where the uplink positioning request is configured to request performing an uplink positioning service, and the uplink positioning request includes a S-Temporary Mobile Subscription Identifier (S-TMSI).

In FIG. 9, the bus architecture may include any number of interconnected buses and bridges, specifically one or more processors represented by processor 900 and various circuits of the storage represented by storage 910 are linked together. The bus architecture can also link together various other circuits such as peripherals, voltage regulators, and power management circuits, which are all well known in the art and therefore will not be described further herein. The bus interface provides the interface. The transceiver 920 may be a plurality of elements, including a transmitter and a receiver, providing a unit for communicating with various other devices over transmission media, including wireless channels, wired channels, optical cables, etc. Transmission medium. For different user equipment, the user interface 930 can also be an interface capable of externally connecting internal and external required equipment. The connected equipment includes but is not limited to a keypad, a display, a speaker, a microphone, a joystick, etc.

The processor 900 is responsible for managing the bus architecture and general processing, and the storage 910 can store data used by the processor 900 when performing operations.

Optionally, the processor 900 may be a CPU (central processing unit), an application specific integrated circuit (Application Specific Integrated Circuit, ASIC), a field programmable gate array (Field-Programmable Gate Array, FPGA) or a complex programmable logic device (Complex). Programmable Logic Device (CPLD), the processor can also adopt a multi-core architecture.
any of the methods provided by the embodiments of the present disclosure according to the obtained executable instructions by calling the computer program stored in the storage. The processor and storage can also be physically separated.

An embodiment of the present disclosure also provides a base station, as shown in Fig. 10, including a storage 1010, a transceiver 1020, and a processor 1000:
where the storage 1010 is configured to store computer programs; the transceiver 1020 is configured to send and receive data under a control of the processor 1000; the processor 1000 is configured to read the computer programs in the storage 1010 to perform:
receiving a positioning wake-up indication which is sent to the base station by a terminal in an inactive state or an idle state;
sending a positioning report message of the terminal to a positioning server, according to the positioning wake-up indication;
where the positioning reporting message includes a terminal identification of the terminal; or, the positioning reporting message includes a preset uplink positioning resource allocated by the base station for the terminal to send an uplink positioning signal.

Optionally, the receiving the positioning wake-up indication sent through the preset configuration resource includes:
receiving the positioning wake-up indication;
where the positioning wake-up indication is sent by sending a preset preamble at a preset opportunity on a physical random access channel (PRACH); or
the positioning wake-up indication is sent by sending a Message 1 or a Message A of a random access process by sending a preset preamble at a preset opportunity on a PRACH.

Optionally, the receiving the positioning wake-up indication which is sent by the terminal to the base station through the random access process includes:
receiving the positioning wake-up indication which is sent by the terminal to the base station through a Message 3 in a four-step random access process or a Message A in a two-step random access process, where the positioning wake-up indication is configured to request the base station to allocate the uplink positioning resource to the terminal.

Optionally, after receiving the positioning wake-up indication which is sent by the terminal to the base station through the random access process, the processor is further configured to perform:
sending to the terminal, the preset uplink positioning resource configured for the terminal to send the uplink positioning signal, through the random access process or the dedicated signaling;
where the preset uplink positioning resource includes a Sounding Reference Signal (SRS) configuration resource and/or a Physical Random Access Channel (PRACH) configuration resource.

Optionally, the processor is further configured to perform:
encapsulating the preset uplink positioning resource configured for the terminal, and sending the encapsulated preset uplink positioning resource to a core network.

Optionally, when the positioning wake-up indication sent by the terminal is received through the Message 1 in the random access process, the processor is further configured to perform:
in response to the Message 1, send a Message 2 to the terminal, where the Message 2 includes an uplink positioning resource index pre-configured by the base station;
receiving a Message 3 sent by the terminal, where the Message 3 includes the uplink positioning resource requested by the terminal according to the uplink positioning resource index;
sending a Message 4 to the terminal, where the Message 4 includes an uplink positioning resource configured by the base station for the terminal according to the uplink positioning resource requested by the terminal.

Optionally, the processor is further configured to perform:
receiving an uplink positioning signal which is sent by the terminal to the base station through the preset uplink positioning resource;
where the preset uplink positioning resource is an exclusive resource pre-configured by the base station for the terminal; or
the preset uplink positioning resource is an uplink positioning resource allocated by the base station for the terminal after the terminal sends the positioning wake-up indication to the base station.

Optionally, the uplink positioning signal includes a PRACH channel and/or an SRS signal.

Optionally, the processor is further configured to perform:
sending resource configuration information to the terminal through the dedicated signaling;
the resource configuration information includes the preset configuration resource and/or preset uplink positioning resource used for sending the uplink positioning signal;
where different terminals correspond to different preset configuration resources and different preset uplink positioning resources.

Optionally, after sending the resource configuration information to the terminal, the processor is further configured to perform:
sending a resource association indication information to a positioning server; where the resource association indication information records an association relationship between the preset uplink positioning resource and the terminal identification of the terminal.

Optionally, the processor is further configured to perform:
sending a candidate resource for sending the uplink positioning signal in a current cell to the positioning server;
obtaining a recommended resource which is sent by the positioning server based on candidate resources of multiple base stations;
determining a preconfigured uplink positioning resource according to the recommended resource; and
broadcasting the uplink positioning resource.

Optionally, the processor is further configured to perform:
broadcasting a preset PRACH opportunity and a preset preamble for sending the positioning wake-up indication

In FIG. 10, the bus architecture may include any number of interconnected buses and bridges, specifically one or more processors represented by processor 1000 and various circuits of the storage represented by storage 1010 are linked together. The bus architecture can also link together various other circuits such as peripherals, voltage regulators, and power management circuits, which are all well known in the art and therefore will not be described further herein. The bus interface provides the interface. The transceiver 1020 may be a plurality of components, including a transmitter and a receiver, providing a unit for communicating with various other devices over transmission media, including wireless channels, wired channels, optical cables, and other transmission media. The processor 1000 is responsible for managing the bus architecture and general processing, and the storage 1010 can store data used by the processor 1000 when performing operations.

The processor 1000 may be a central processing unit (CPU), an application specific integrated circuit (Application Specific Integrated Circuit, ASIC), a field programmable gate array (Field-Programmable Gate Array, FPGA), or a complex programmable logic device (Complex Programmable Logic Device, CPLD), the processor can also adopt a multi-core architecture.

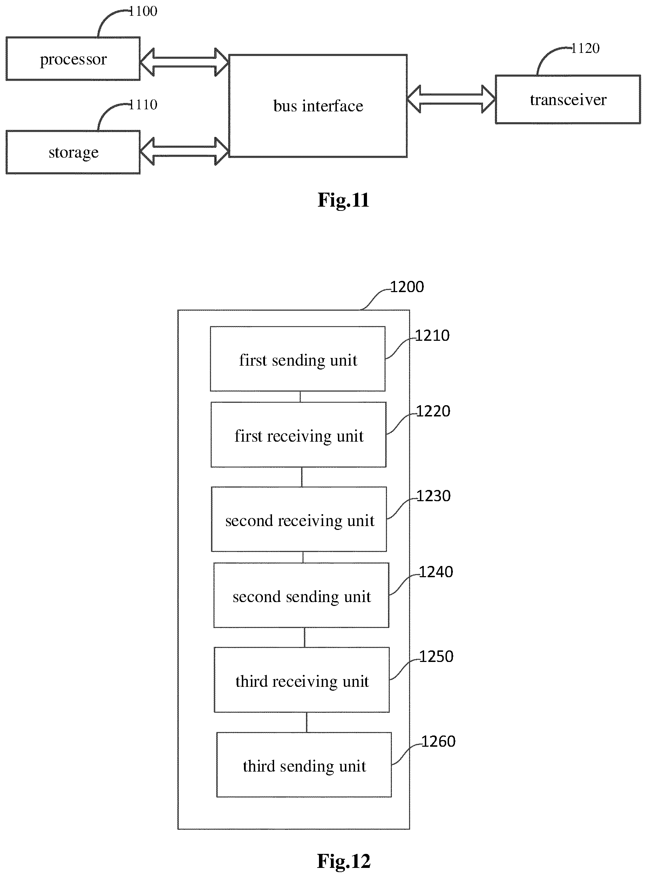

An embodiment of the present disclosure also provides a positioning server, as shown in Fig. 11, including a storage 1110, a transceiver 1120, and a processor 1100:
where the storage 1110 is configured to store computer programs; the transceiver 1120 is configured to send and receive data under a control of the processor 1100; the processor 1100 is configured to read the computer programs in the storage 1110 to perform:
receiving a positioning report message sent by a base station, where the positioning report message is used for an uplink positioning of a terminal which is in an inactive state or an idle state;
determining a uplink positioning resource used for the terminal to send an uplink positioning signal, according to the positioning report message;
where the positioning report message includes a terminal identification of the terminal, and the uplink positioning resource used for the terminal to send the uplink positioning signal is determined according to a pre-recorded association between the terminal identification and the uplink positioning resource pre-configured by the base station; or
the positioning report message includes the uplink positioning resource allocated by the base station for the terminal to send an uplink positioning signal.

Optionally, the processor is further configured to perform:
sending a positioning signal indication to a neighboring base station of the base station, where the positioning signal indication includes the uplink positioning resource, and is configured to instruct the neighboring base station to use the uplink positioning resource to receive the uplink positioning signal.

In FIG. 11, the bus architecture may include any number of interconnected buses and bridges, specifically one or more processors represented by processor 1100 and various circuits of the storage represented by storage 1110 are linked together. The bus architecture can also link together various other circuits such as peripherals, voltage regulators, and power management circuits, which are all well known in the art and therefore will not be described further herein. The bus interface provides the interface. The transceiver 1120 may be a plurality of elements, including a transmitter and a receiver, providing a unit for communicating with various other devices over transmission media, including wireless channels, wired channels, optical cables, and other transmission media. The processor 1100 is responsible for managing the bus architecture and general processing, and the storage 1110 can store data used by the processor 1100 when performing operations.

The processor 1100 may be a central processing unit (CPU), an application specific integrated circuit (Application Specific Integrated Circuit, ASIC), a field programmable gate array (Field-Programmable Gate Array, FPGA), or a complex programmable logic device (Complex Programmable Logic Device, CPLD), the processor can also adopt a multi-core architecture.

An embodiment of the present disclosure also provides a positioning device, which is performed by a terminal. As shown in Fig. 12, the positioning device includes:
a first sending unit 1210, configured to, when the terminal is in an inactive state or an idle state, send a positioning wake-up indication to a base station.

Optionally, the first sending unit 1210 sending the positioning wake-up indication to the base station through the preset configuration resource includes one of the following:
sending the positioning wake-up indication to the base station, by sending a preset preamble at a preset opportunity on a physical random access channel (PRACH);
sending the positioning wake-up indication to the base station, by sending a Message 1 or a Message A of the random access process by sending a preset preamble at a preset opportunity on a PRACH.

Optionally, the first sending unit 1210 sending the positioning wake-up indication to the base station through the random access process includes:
through a Message 3 in a four-step random access process, or a Message A in a two-step random access process, sending the positioning wake-up indication to the base station, where the positioning wake-up indication is configured to request the base station to allocate an uplink positioning resource for the terminal.

Optionally, the positioning device further includes a first receiving unit 1220:
where after the first sending unit sends the positioning wake-up indication, the first receiving unit 1220 is configured to:
receive a preset uplink positioning resource which is configured by the base station for the terminal to send an uplink positioning signal;
where the preset uplink positioning resource includes a Sounding Reference Signal (SRS) configuration resource and/or a Physical Random Access Channel (PRACH) configuration resource.

Optionally, the first receiving unit 1220 receiving the preset uplink positioning resource which is configured by the base station for the terminal to send the uplink positioning signal includes:
receiving the preset uplink positioning resource configured by the base station for the terminal, through a random access process and /or a dedicated signaling.

Optionally, when the positioning wake-up indication is sent to the base station through the Message 1 in the four-step random access process, the device further includes:
a second receiving unit1230, configured to receive a Message 2 sent by the base station, where the Message 2 includes an uplink positioning resource index pre-configured by the base station;
a second sending unit 1240, configured to send a Message 3 to the base station, where the Message 3 includes the uplink positioning resource requested by the terminal according to the uplink positioning resource index;
a third receiving unit 1250, configured to receive a Message 4 sent by the base station, where the Message 4 includes an uplink positioning resource configured by the base station for the terminal according to the uplink positioning resource requested by the terminal.

Optionally, the first sending unit 1210 is further to:
send an uplink positioning signal to the base station through a preset uplink positioning resource;
where the preset uplink positioning resource is the exclusive resource pre-configured by the base station to the terminal; or
the preset uplink positioning resource is an uplink positioning resource allocated by the base station to the terminal after the terminal sends the positioning wake-up indication to the base station.

Optionally, the uplink positioning signal includes a PRACH channel and/or an SRS signal.

Optionally, the positioning device further includes a third sending unit 1260,
where subsequent to the receiving the uplink positioning resource configured by the base station for the terminal to send the uplink positioning signal, the third sending unit 1260 is further configured to:
send an uplink positioning request to the base station;
where the uplink positioning request is configured to request performing an uplink positioning service, and the uplink positioning request includes a S-Temporary Mobile Subscription Identifier (S-TMSI).

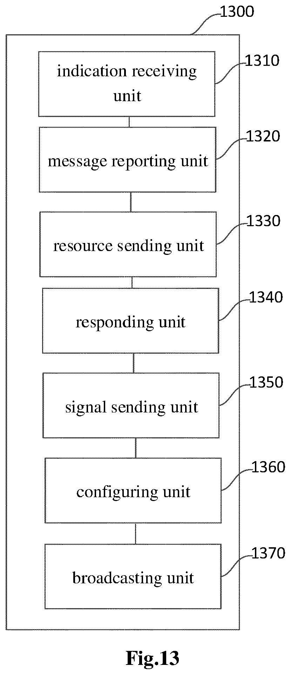

An embodiment of the present disclosure also provides a positioning device, which is performed by a base station. As shown in Fig. 13, the positioning device 1300 includes:
an indication receiving unit 1310 configured to receive a positioning wake-up indication which is sent to the base station by a terminal in an inactive state or an idle state;
a message reporting unit 1320, configured to send a positioning report message of the terminal to a positioning server, according to the positioning wake-up indication;
where the positioning reporting message includes a terminal identification of the terminal; or, the positioning reporting message includes a preset uplink positioning resource allocated by the base station for the terminal to send an uplink positioning signal.

Optionally, the indication receiving unit 1310 receiving the positioning wake-up indication sent by the terminal to the base station includes:
receiving the positioning wake-up indication which is sent by the terminal to the base station through one of a preset configuration resource, a random access process and a dedicated signaling;
where the preset configuration resource is an exclusive resource configured by the base station to the terminal, or the preset configuration resource is an exclusive resource broadcasted by the base station.

Optionally, the indication receiving unit 1310 receiving the positioning wake-up indication sent through the preset configuration resource includes:
receiving the positioning wake-up indication;
where the positioning wake-up indication is sent by sending a preset preamble at a preset opportunity on a physical random access channel (PRACH); or
the positioning wake-up indication is sent by sending a Message 1 or a Message A of a random access process by sending a preset preamble at a preset opportunity on a PRACH.

Optionally, the indication receiving unit 1310 receiving the positioning wake-up indication which is sent by the terminal to the base station through the random access process includes:
receiving the positioning wake-up indication which is sent by the terminal to the base station through a Message 3 in a four-step random access process or a Message A in a two-step random access process, where the positioning wake-up indication is configured to request the base station to allocate the uplink positioning resource to the terminal.

Optionally, the positioning device further includes a resource sending unit 1330,
where subsequent to the receiving the positioning wake-up indication which is sent by the terminal to the base station through the random access process, the resource sending unit 1330 is further configured to:
send to the terminal, the preset uplink positioning resource configured for the terminal to send the uplink positioning signal, through the random access process or the dedicated signaling;
where the preset uplink positioning resource includes a Sounding Reference Signal (SRS) configuration resource and/or a Physical Random Access Channel (PRACH) configuration resource.

Optionally, the message reporting unit 1320 is further configured to:
encapsulate the preset uplink positioning resource configured for the terminal, and send the encapsulated preset uplink positioning resource to a core network.

Optionally, the positioning device further includes a responding unit 1340, where when the positioning wake-up indication sent by the terminal is received through the Message 1 in the random access process, the responding unit 1340 is configured to:
in response to the Message 1, send a Message 2 to the terminal, where the Message 2 includes an uplink positioning resource index pre-configured by the base station;
receive a Message 3 sent by the terminal, where the Message 3 includes the uplink positioning resource requested by the terminal according to the uplink positioning resource index;
send a Message 4 to the terminal, where the Message 4 includes an uplink positioning resource configured by the base station for the terminal according to the uplink positioning resource requested by the terminal.

Optionally, the positioning device further includes:
a signal sending unit 1350, configured to receive an uplink positioning signal which is sent by the terminal to the base station through the preset uplink positioning resource;
where the preset uplink positioning resource is an exclusive resource pre-configured by the base station for the terminal; or
the preset uplink positioning resource is an uplink positioning resource allocated by the base station for the terminal after the terminal sends the positioning wake-up indication to the base station.

Optionally, the uplink positioning signal includes a PRACH channel and/or an SRS signal.

Optionally, the positioning device further includes:
a configuring unit 1360, configured to send resource configuration information to the terminal through the dedicated signaling;
the resource configuration information includes the preset configuration resource and/or preset uplink positioning resource used for sending the uplink positioning signal;
where different terminals correspond to different preset configuration resources and different preset uplink positioning resources.

Optionally, subsequent to the sending resource configuration information to the terminal, the message reporting unit 1320 is further configured to:
send a resource association indication information to a positioning server; where the resource association indication information records an association relationship between the preset uplink positioning resource and the terminal identification of the terminal.

Optionally, the message reporting unit is further configured to:
send a candidate resource for sending the uplink positioning signal in a current cell to the positioning server;
obtain a recommended resource which is sent by the positioning server based on candidate resources of multiple base stations;
determine a preconfigured uplink positioning resource according to the recommended resource; and
broadcast the uplink positioning resource.

Optionally, the positioning device further includes:
a broadcasting unit 1370, configured to broadcast a preset PRACH opportunity and a preset preamble for sending the positioning wake-up indication.

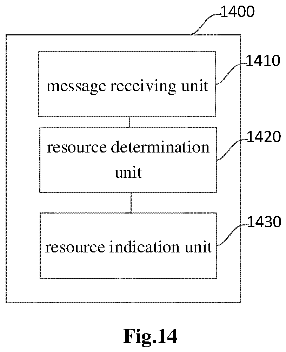

An embodiment of the present disclosure also provides a positioning device, which is performed by a positioning server. As shown in Fig. 14, the positioning device 1400 includes:
a message receiving unit 1410, configured to receive a positioning report message sent by a base station, where the positioning report message is used for an uplink positioning of a terminal which is in an inactive state or an idle state;
a resource determination unit 1420, configured to determine a uplink positioning resource used for the terminal to send an uplink positioning signal, according to the positioning report message;
where the positioning report message includes a terminal identification of the terminal, and the uplink positioning resource used for the terminal to send the uplink positioning signal is determined according to a pre-recorded association between the terminal identification and the uplink positioning resource pre-configured by the base station; or
the positioning report message includes the uplink positioning resource allocated by the base station for the terminal to send an uplink positioning signal.

Optionally, the positioning device further includes:
a resource indication unit 1430, configured to send a positioning signal indication to a neighboring base station of the base station, where the positioning signal indication includes the uplink positioning resource, and is configured to instruct the neighboring base station to use the uplink positioning resource to receive the uplink positioning signal.

It should be noted here that the above-mentioned device provided by the embodiment of the present disclosure can implement all the method steps implemented by the above-mentioned method embodiment, and can achieve the same technical effect. The same as the method embodiment in this embodiment will no longer be used. The parts and beneficial effects will be described in detail.

Embodiments of the present disclosure also provide a processor-readable storage medium, where the processor-readable storage medium stores a computer program, the computer program is configured to cause the processor to execute the positioning method hereinabove.

The processor-readable storage medium may be any available media or data storage device that the processor can access, including but not limited to magnetic storage (such as floppy disks, hard disks, tapes, magneto-optical disks (MO), etc.), optical storage (such as CD, DVD, BD, HVD, etc.), and semiconductor memory (such as ROM, EPROM, EEPROM, non-volatile memory (NAND FLASH), solid state drive (SSD)), etc.

Those skilled in the art will appreciate that embodiments of the present disclosure may be provided as methods, systems, or computer program products. Accordingly, the present disclosure may take the form of an entirely hardware embodiment, an entirely software embodiment, or an embodiment that combines software and hardware aspects. Furthermore, the present disclosure may take the form of a computer program product embodied on one or more computer-usable storage media (including, but not limited to, magnetic disk storage, optical storage, and the like) having computer-usable program code embodied therein.

The disclosure is described with reference to flowchart illustrations and/or block diagrams of methods, apparatus (systems), and computer program products according to embodiments of the disclosure. It will be understood that each process and/or block in the flowchart illustrations and/or block diagrams, and combinations of processes and/or blocks in the flowchart illustrations and/or block diagrams, can be implemented by computer-executable instructions. These computer-executable instructions may be provided to a processor of a general-purpose computer, special-purpose computer, embedded processor, or other programmable data processing device to produce a machine such that the instructions executed by the processor of the computer or other programmable data processing device produce Means for implementing the functions specified in a process or processes in a flowchart and/or in a block or blocks in a block diagram.

These processor-executable instructions may also be stored in a processor-readable memory that causes a computer or other programmable data processing apparatus to operate in a particular manner, such that the generation of instructions stored in the processor-readable storage includes the manufacture of the instruction means product, the instruction device implements the function specified in one process or multiple processes in the flow chart and/or one block or multiple blocks in the block diagram.

These processor-executable instructions may also be loaded onto a computer or other programmable data processing device, causing a series of operational steps to be performed on the computer or other programmable device to produce computer-implemented processing, thereby causing the computer or other programmable device to The instructions that are executed provide steps for implementing the functions specified in a process or processes of the flowchart diagrams and/or a block or blocks of the block diagrams.

Obviously, those skilled in the art can make various changes and modifications to the present disclosure without departing from the spirit and scope of the disclosure. In this way, if these modifications and variations of the present disclosure fall within the scope of the claims of the present disclosure and equivalent technologies, the present disclosure is also intended to include these modifications and variations.

## Claims

1. A positioning method, performed by a terminal and comprising:
in a case that the terminal is in an inactive state or an idle state, sending a positioning wake-up indication to a base station.

2. The positioning method according to claim 1, wherein the sending the positioning wake-up indication to the base station comprises:
sending the positioning wake-up indication to the base station, through one of a preset configuration resource, a random access process and a dedicated signaling;
wherein the preset configuration resource is an exclusive resource configured by the base station for the terminal, or the preset configuration resource is an exclusive resource broadcasted by the base station.

3. The positioning method according to claim 2, wherein the sending the positioning wake-up indication to the base station through the preset configuration resource comprises one of the following:
sending the positioning wake-up indication to the base station, by sending a preset preamble at a preset opportunity on a physical random access channel (PRACH);
sending the positioning wake-up indication to the base station, by sending a Message 1 or a Message A of the random access process by sending a preset preamble at a preset opportunity on a PRACH.

4. The positioning method according to claim 2, wherein the sending the positioning wake-up indication to the base station through the random access process comprises:
through a Message 3 in a four-step random access process, or a Message A in a two-step random access process, sending the positioning wake-up indication to the base station, wherein the positioning wake-up indication is configured to request the base station to allocate an uplink positioning resource for the terminal.

5. The positioning method according to claim 1, wherein subsequent to the sending the positioning wake-up indication, the method further comprises:
receiving a preset uplink positioning resource which is configured by the base station for the terminal to send an uplink positioning signal;
wherein the preset uplink positioning resource comprises a Sounding Reference Signal (SRS) configuration resource and/or a Physical Random Access Channel (PRACH) configuration resource.

6. The positioning method according to claim 5, wherein the receiving the preset uplink positioning resource which is configured by the base station for the terminal to send the uplink positioning signal comprises:
receiving the preset uplink positioning resource configured by the base station for the terminal, through a random access process and /or a dedicated signaling.

7. The positioning method according to claim 3, wherein in a case that the positioning wake-up indication is sent to the base station through the Message 1 in the four-step random access process, the method comprises:
receiving a Message 2 sent by the base station, wherein the Message 2 comprises an uplink positioning resource index pre-configured by the base station;
sending a Message 3 to the base station, wherein the Message 3 comprises the uplink positioning resource requested by the terminal according to the uplink positioning resource index;
receiving a Message 4 sent by the base station, wherein the Message 4 comprises an uplink positioning resource configured by the base station for the terminal according to the uplink positioning resource requested by the terminal.

8. The positioning method according to claim 1 or 2, further comprising:
sending an uplink positioning signal to the base station through a preset uplink positioning resource;
wherein the preset uplink positioning resource is the exclusive resource pre-configured by the base station to the terminal; or
the preset uplink positioning resource is an uplink positioning resource allocated by the base station to the terminal after the terminal sends the positioning wake-up indication to the base station.

9. The positioning method according to claim 8, wherein the uplink positioning signal comprises a PRACH channel and/or an SRS signal.

10. The positioning method according to claim 5, wherein subsequent to the receiving the uplink positioning resource configured by the base station for the terminal to send the uplink positioning signal, the method further comprises:
sending an uplink positioning request to the base station;
wherein the uplink positioning request is configured to request performing an uplink positioning service, and the uplink positioning request comprises a S-Temporary Mobile Subscription Identifier (S-TMSI).

11. A positioning method, performed by a base station and comprising:
receiving a positioning wake-up indication which is sent to the base station by a terminal in an inactive state or an idle state;
sending a positioning report message of the terminal to a positioning server, according to the positioning wake-up indication;
wherein the positioning reporting message comprises a terminal identification of the terminal; or, the positioning reporting message comprises a preset uplink positioning resource allocated by the base station for the terminal to send an uplink positioning signal.

12. The positioning method according to claim 11, wherein the receiving the positioning wake-up indication sent by the terminal to the base station comprises:
receiving the positioning wake-up indication which is sent by the terminal to the base station through one of a preset configuration resource, a random access process and a dedicated signaling;
wherein the preset configuration resource is an exclusive resource configured by the base station to the terminal, or the preset configuration resource is an exclusive resource broadcasted by the base station.

13. The positioning method according to claim 12, wherein the receiving the positioning wake-up indication sent through the preset configuration resource comprises:
receiving the positioning wake-up indication;
wherein the positioning wake-up indication is sent by sending a preset preamble at a preset opportunity on a physical random access channel (PRACH); or
the positioning wake-up indication is sent by sending a Message 1 or a Message A of a random access process by sending a preset preamble at a preset opportunity on a PRACH.

14. The positioning method according to claim 12, wherein the receiving the positioning wake-up indication which is sent by the terminal to the base station through the random access process comprises:
receiving the positioning wake-up indication which is sent by the terminal to the base station through a Message 3 in a four-step random access process or a Message A in a two-step random access process, wherein the positioning wake-up indication is configured to request the base station to allocate the uplink positioning resource to the terminal.

15. The positioning method according to claim 12, wherein subsequent to the receiving the positioning wake-up indication which is sent by the terminal to the base station through the random access process, the method further comprises:
sending to the terminal, the preset uplink positioning resource configured for the terminal to send the uplink positioning signal, through the random access process or the dedicated signaling;
wherein the preset uplink positioning resource comprises a Sounding Reference Signal (SRS) configuration resource and/or a Physical Random Access Channel (PRACH) configuration resource.

16. The positioning method according to claim 15, further comprising:
encapsulating the preset uplink positioning resource configured for the terminal, and sending the encapsulated preset uplink positioning resource to a core network.

17. The positioning method according to claim 13, wherein in a case that the positioning wake-up indication sent by the terminal is received through the Message 1 in the random access process, the method further comprises:
in response to the Message 1, sending a Message 2 to the terminal, wherein the Message 2 comprises an uplink positioning resource index pre-configured by the base station;
receiving a Message 3 sent by the terminal, wherein the Message 3 comprises the uplink positioning resource requested by the terminal according to the uplink positioning resource index;
sending a Message 4 to the terminal, wherein the Message 4 comprises an uplink positioning resource configured by the base station for the terminal according to the uplink positioning resource requested by the terminal.

18. The positioning method according to claim 12, further comprising:
receiving an uplink positioning signal which is sent by the terminal to the base station through the preset uplink positioning resource;
wherein the preset uplink positioning resource is an exclusive resource pre-configured by the base station for the terminal; or
the preset uplink positioning resource is an uplink positioning resource allocated by the base station for the terminal after the terminal sends the positioning wake-up indication to the base station.

19. The positioning method according to claim 18, wherein the uplink positioning signal comprises a PRACH channel and/or an SRS signal.

20. The positioning method according to claim 12, further comprising:
sending resource configuration information to the terminal through the dedicated signaling;
the resource configuration information comprises the preset configuration resource and/or preset uplink positioning resource used for sending the uplink positioning signal;
wherein different terminals correspond to different preset configuration resources and different preset uplink positioning resources.

21. The positioning method according to claim 20, wherein subsequent to the sending resource configuration information to the terminal, the method further comprises:
sending a resource association indication information to a positioning server; wherein the resource association indication information records an association relationship between the preset uplink positioning resource and the terminal identification of the terminal.

22. The positioning method according to claim 12, further comprising:
sending a candidate resource for sending the uplink positioning signal in a current cell to the positioning server;
obtaining a recommended resource which is sent by the positioning server based on candidate resources of multiple base stations;
determining a preconfigured uplink positioning resource according to the recommended resource; and
broadcasting the uplink positioning resource.

23. The positioning method according to claim 13, further comprising:
broadcasting a preset PRACH opportunity and a preset preamble for sending the positioning wake-up indication.

24. A positioning method, performed by a positioning server and comprising:
receiving a positioning report message sent by a base station, wherein the positioning report message is used for an uplink positioning of a terminal which is in an inactive state or an idle state;
determining a uplink positioning resource used for the terminal to send an uplink positioning signal, according to the positioning report message;
wherein the positioning report message comprises a terminal identification of the terminal, and the uplink positioning resource used for the terminal to send the uplink positioning signal is determined according to a pre-recorded association between the terminal identification and the uplink positioning resource pre-configured by the base station; or
the positioning report message comprises the uplink positioning resource allocated by the base station for the terminal to send an uplink positioning signal.

25. The positioning method according to claim 24, further comprising:
sending a positioning signal indication to a neighboring base station of the base station, wherein the positioning signal indication comprises the uplink positioning resource, and is configured to instruct the neighboring base station to use the uplink positioning resource to receive the uplink positioning signal.

26. A terminal, comprising a storage, a transceiver, and a processor;
wherein the storage is configured to store computer programs; the transceiver is configured to send and receive data under a control of the processor; the processor is configured to read the computer programs in the storage to perform:
in a case that the terminal is in an inactive state or an idle state, sending a positioning wake-up indication to a base station.

27. The terminal according to claim 26, wherein the sending the positioning wake-up indication to the base station comprises:
sending the positioning wake-up indication to the base station, through one of a preset configuration resource, a random access process and a dedicated signaling;
wherein the preset configuration resource is an exclusive resource configured by the base station for the terminal, or the preset configuration resource is an exclusive resource broadcasted by the base station.

28. The terminal according to claim 27, wherein the sending the positioning wake-up indication to the base station through the preset configuration resource comprises one of the following:
sending the positioning wake-up indication to the base station, by sending a preset preamble at a preset opportunity on a physical random access channel (PRACH);
sending the positioning wake-up indication to the base station, by sending a Message 1 or a Message A of the random access process by sending a preset preamble at a preset opportunity on a PRACH.

29. The terminal according to claim 27, wherein the sending the positioning wake-up indication to the base station through the random access process comprises:
through a Message 3 in a four-step random access process, or a Message A in a two-step random access process, sending the positioning wake-up indication to the base station, wherein the positioning wake-up indication is configured to request the base station to allocate an uplink positioning resource for the terminal.

30. The terminal according to claim 26, wherein subsequent to the sending the positioning wake-up indication, the processor is further configured to perform:
receiving a preset uplink positioning resource which is configured by the base station for the terminal to send an uplink positioning signal;
wherein the preset uplink positioning resource comprises a Sounding Reference Signal (SRS) configuration resource and/or a Physical Random Access Channel (PRACH) configuration resource.

31. The terminal according to claim 30, wherein the receiving the preset uplink positioning resource which is configured by the base station for the terminal to send the uplink positioning signal comprises:
receiving the preset uplink positioning resource configured by the base station for the terminal, through a random access process and /or a dedicated signaling.

32. The terminal according to claim 28, wherein in a case that the positioning wake-up indication is sent to the base station through the Message 1 in the four-step random access process, the processor is further configured to perform:
receiving a Message 2 sent by the base station, wherein the Message 2 comprises an uplink positioning resource index pre-configured by the base station;
sending a Message 3 to the base station, wherein the Message 3 comprises the uplink positioning resource requested by the terminal according to the uplink positioning resource index;
receiving a Message 4 sent by the base station, wherein the Message 4 comprises an uplink positioning resource configured by the base station for the terminal according to the uplink positioning resource requested by the terminal.

33. The terminal according to claim 26 or 27, wherein the processor is further configured to perform:
sending an uplink positioning signal to the base station through a preset uplink positioning resource;
wherein the preset uplink positioning resource is the exclusive resource pre-configured by the base station to the terminal; or
the preset uplink positioning resource is an uplink positioning resource allocated by the base station to the terminal after the terminal sends the positioning wake-up indication to the base station.

34. A base station, comprising a storage, a transceiver, and a processor;
wherein the storage is configured to store computer programs; the transceiver is configured to send and receive data under a control of the processor; the processor is configured to read the computer programs in the storage to perform:
receiving a positioning wake-up indication which is sent to the base station by a terminal in an inactive state or an idle state;
sending a positioning report message of the terminal to a positioning server, according to the positioning wake-up indication;
wherein the positioning reporting message comprises a terminal identification of the terminal; or, the positioning reporting message comprises a preset uplink positioning resource allocated by the base station for the terminal to send an uplink positioning signal.

35. The base station according to claim 34, wherein the receiving the positioning wake-up indication sent through the preset configuration resource comprises:
receiving the positioning wake-up indication;
wherein the positioning wake-up indication is sent by sending a preset preamble at a preset opportunity on a physical random access channel (PRACH); or
the positioning wake-up indication is sent by sending a Message 1 or a Message A of a random access process by sending a preset preamble at a preset opportunity on a PRACH.

36. The base station according to claim 35, wherein the receiving the positioning wake-up indication which is sent by the terminal to the base station through the random access process comprises:
receiving the positioning wake-up indication which is sent by the terminal to the base station through a Message 3 in a four-step random access process or a Message A in a two-step random access process, wherein the positioning wake-up indication is configured to request the base station to allocate the uplink positioning resource to the terminal.

37. The base station according to claim 35, wherein after receiving the positioning wake-up indication which is sent by the terminal to the base station through the random access process, the processor is further configured to perform:
sending to the terminal, the preset uplink positioning resource configured for the terminal to send the uplink positioning signal, through the random access process or the dedicated signaling;
wherein the preset uplink positioning resource comprises a Sounding Reference Signal (SRS) configuration resource and/or a Physical Random Access Channel (PRACH) configuration resource.

38. The base station according to claim 37, wherein the processor is further configured to perform:
encapsulating the preset uplink positioning resource configured for the terminal, and sending the encapsulated preset uplink positioning resource to a core network.

39. The base station according to claim 37, wherein in a case that the positioning wake-up indication sent by the terminal is received through the Message 1 in the random access process, the processor is further configured to perform:
in response to the Message 1, send a Message 2 to the terminal, wherein the Message 2 comprises an uplink positioning resource index pre-configured by the base station;
receiving a Message 3 sent by the terminal, wherein the Message 3 comprises the uplink positioning resource requested by the terminal according to the uplink positioning resource index;
sending a Message 4 to the terminal, wherein the Message 4 comprises an uplink positioning resource configured by the base station for the terminal according to the uplink positioning resource requested by the terminal.

40. The base station according to claim 35, wherein the processor is further configured to perform:
receiving an uplink positioning signal which is sent by the terminal to the base station through the preset uplink positioning resource;
wherein the preset uplink positioning resource is an exclusive resource pre-configured by the base station for the terminal; or
the preset uplink positioning resource is an uplink positioning resource allocated by the base station for the terminal after the terminal sends the positioning wake-up indication to the base station.

41. The base station according to claim 40, wherein the uplink positioning signal comprises a PRACH channel and/or an SRS signal.

42. The base station according to claim 35, wherein the processor is further configured to perform:
sending resource configuration information to the terminal through the dedicated signaling;
the resource configuration information comprises the preset configuration resource and/or preset uplink positioning resource used for sending the uplink positioning signal;
wherein different terminals correspond to different preset configuration resources and different preset uplink positioning resources.

43. The base station according to claim 42, wherein, after sending the resource configuration information to the terminal, the processor is further configured to perform:
sending a resource association indication information to a positioning server; wherein the resource association indication information records an association relationship between the preset uplink positioning resource and the terminal identification of the terminal.

44. The base station according to claim 35, wherein the processor is further configured to perform:
sending a candidate resource for sending the uplink positioning signal in a current cell to the positioning server;
obtaining a recommended resource which is sent by the positioning server based on candidate resources of multiple base stations;
determining a preconfigured uplink positioning resource according to the recommended resource; and
broadcasting the uplink positioning resource.

45. The base station according to claim 36, wherein the processor is further configured to perform:
broadcasting a preset PRACH opportunity and a preset preamble for sending the positioning wake-up indication.

46. A positioning server, comprising a storage, a transceiver, and a processor;
wherein the storage is configured to store computer programs; the transceiver is configured to send and receive data under a control of the processor; the processor is configured to read the computer programs in the storage to perform:
receiving a positioning report message sent by a base station, wherein the positioning report message is used for an uplink positioning of a terminal which is in an inactive state or an idle state;
determining a uplink positioning resource used for the terminal to send an uplink positioning signal, according to the positioning report message;
wherein the positioning report message comprises a terminal identification of the terminal, and the uplink positioning resource used for the terminal to send the uplink positioning signal is determined according to a pre-recorded association between the terminal identification and the uplink positioning resource pre-configured by the base station; or
the positioning report message comprises the uplink positioning resource allocated by the base station for the terminal to send an uplink positioning signal.

47. The positioning server according to claim 46, wherein the processor is further configured to perform:
sending a positioning signal indication to a neighboring base station of the base station, wherein the positioning signal indication comprises the uplink positioning resource, and is configured to instruct the neighboring base station to use the uplink positioning resource to receive the uplink positioning signal.

48. A positioning device, performed by a terminal, the device comprises:
a first sending unit, configured to, in a case that the terminal is in an inactive state or an idle state, send a positioning wake-up indication to a base station.

49. The positioning device according to claim 48, wherein the sending the positioning wake-up indication to the base station comprises:
sending the positioning wake-up indication to the base station, through one of a preset configuration resource, a random access process and a dedicated signaling;
wherein the preset configuration resource is an exclusive resource configured by the base station for the terminal, or the preset configuration resource is an exclusive resource broadcasted by the base station.

50. The positioning device according to claim 49, wherein the first sending unit sending the positioning wake-up indication to the base station through the preset configuration resource comprises one of the following:
sending the positioning wake-up indication to the base station, by sending a preset preamble at a preset opportunity on a physical random access channel (PRACH);
sending the positioning wake-up indication to the base station, by sending a Message 1 or a Message A of the random access process by sending a preset preamble at a preset opportunity on a PRACH.

51. The positioning device according to claim 50, wherein the first sending unit sending the positioning wake-up indication to the base station through the random access process comprises:
through a Message 3 in a four-step random access process, or a Message A in a two-step random access process, sending the positioning wake-up indication to the base station, wherein the positioning wake-up indication is configured to request the base station to allocate an uplink positioning resource for the terminal.

52. The positioning device according to claim 49, further comprising a first receiving unit:
wherein after the first sending unit sends the positioning wake-up indication, the first receiving unit is configured to:
receive a preset uplink positioning resource which is configured by the base station for the terminal to send an uplink positioning signal;
wherein the preset uplink positioning resource comprises a Sounding Reference Signal (SRS) configuration resource and/or a Physical Random Access Channel (PRACH) configuration resource.

53. The positioning device according to claim 52, wherein the first receiving unit receiving the preset uplink positioning resource which is configured by the base station for the terminal to send the uplink positioning signal comprises:
receiving the preset uplink positioning resource configured by the base station for the terminal, through a random access process and /or a dedicated signaling.

54. The positioning device according to claim 50, wherein in a case that the positioning wake-up indication is sent to the base station through the Message 1 in the four-step random access process, the device further comprises:
a second receiving unit, configured to receive a Message 2 sent by the base station, wherein the Message 2 comprises an uplink positioning resource index pre-configured by the base station;
a second sending unit, configured to send a Message 3 to the base station, wherein the Message 3 comprises the uplink positioning resource requested by the terminal according to the uplink positioning resource index;
a third receiving unit, configured to receive a Message 4 sent by the base station, wherein the Message 4 comprises an uplink positioning resource configured by the base station for the terminal according to the uplink positioning resource requested by the terminal.

55. The positioning device according to claim 48 or 49, wherein the first sending unit is further to:
send an uplink positioning signal to the base station through a preset uplink positioning resource;
wherein the preset uplink positioning resource is the exclusive resource pre-configured by the base station to the terminal; or
the preset uplink positioning resource is an uplink positioning resource allocated by the base station to the terminal after the terminal sends the positioning wake-up indication to the base station.

56. The positioning device according to claim 55, wherein the uplink positioning signal comprises a PRACH channel and/or an SRS signal.

57. The positioning device according to claim 52, further comprising a third sending unit,
wherein subsequent to the receiving the uplink positioning resource configured by the base station for the terminal to send the uplink positioning signal, the third sending unit is further configured to:
send an uplink positioning request to the base station;
wherein the uplink positioning request is configured to request performing an uplink positioning service, and the uplink positioning request comprises a S-Temporary Mobile Subscription Identifier (S-TMSI).

58. A positioning device, performed by a base station and comprising:
an indication receiving unit configured to receive a positioning wake-up indication which is sent to the base station by a terminal in an inactive state or an idle state;
a message reporting unit, configured to send a positioning report message of the terminal to a positioning server, according to the positioning wake-up indication;
wherein the positioning reporting message comprises a terminal identification of the terminal; or, the positioning reporting message comprises a preset uplink positioning resource allocated by the base station for the terminal to send an uplink positioning signal.

59. The positioning device according to claim 58, wherein the indication receiving unit receiving the positioning wake-up indication sent by the terminal to the base station comprises:
receiving the positioning wake-up indication which is sent by the terminal to the base station through one of a preset configuration resource, a random access process and a dedicated signaling;
wherein the preset configuration resource is an exclusive resource configured by the base station to the terminal, or the preset configuration resource is an exclusive resource broadcasted by the base station.

60. The positioning device according to claim 59, wherein the indication receiving unit receiving the positioning wake-up indication sent through the preset configuration resource comprises:
receiving the positioning wake-up indication;
wherein the positioning wake-up indication is sent by sending a preset preamble at a preset opportunity on a physical random access channel (PRACH); or
the positioning wake-up indication is sent by sending a Message 1 or a Message A of a random access process by sending a preset preamble at a preset opportunity on a PRACH.

61. The positioning device according to claim 59, wherein the indication receiving unit receiving the positioning wake-up indication which is sent by the terminal to the base station through the random access process comprises:
receiving the positioning wake-up indication which is sent by the terminal to the base station through a Message 3 in a four-step random access process or a Message A in a two-step random access process, wherein the positioning wake-up indication is configured to request the base station to allocate the uplink positioning resource to the terminal.

62. The positioning device according to claim 59, further comprising a resource sending unit,
wherein subsequent to the receiving the positioning wake-up indication which is sent by the terminal to the base station through the random access process, the resource sending unit is further configured to:
send to the terminal, the preset uplink positioning resource configured for the terminal to send the uplink positioning signal, through the random access process or the dedicated signaling;
wherein the preset uplink positioning resource comprises a Sounding Reference Signal (SRS) configuration resource and/or a Physical Random Access Channel (PRACH) configuration resource.

63. The positioning device according to claim 62, wherein the message reporting unit is further configured to:
encapsulate the preset uplink positioning resource configured for the terminal, and send the encapsulated preset uplink positioning resource to a core network.

64. The positioning device according to claim 60, further comprising a responding unit, wherein in a case that the positioning wake-up indication sent by the terminal is received through the Message 1 in the random access process, the responding unit is configured to:
in response to the Message 1, send a Message 2 to the terminal, wherein the Message 2 comprises an uplink positioning resource index pre-configured by the base station;
receive a Message 3 sent by the terminal, wherein the Message 3 comprises the uplink positioning resource requested by the terminal according to the uplink positioning resource index;
send a Message 4 to the terminal, wherein the Message 4 comprises an uplink positioning resource configured by the base station for the terminal according to the uplink positioning resource requested by the terminal.

65. The positioning device according to claim 59, further comprising:
a signal sending unit, configured to receive an uplink positioning signal which is sent by the terminal to the base station through the preset uplink positioning resource;
wherein the preset uplink positioning resource is an exclusive resource pre-configured by the base station for the terminal; or
the preset uplink positioning resource is an uplink positioning resource allocated by the base station for the terminal after the terminal sends the positioning wake-up indication to the base station.

66. The positioning device according to claim 65, wherein the uplink positioning signal comprises a PRACH channel and/or an SRS signal.

67. The positioning device according to claim 59, further comprising:
a configuring unit, configured to send resource configuration information to the terminal through the dedicated signaling;
the resource configuration information comprises the preset configuration resource and/or preset uplink positioning resource used for sending the uplink positioning signal;
wherein different terminals correspond to different preset configuration resources and different preset uplink positioning resources.

68. The positioning device according to claim 67, wherein subsequent to the sending resource configuration information to the terminal, the message reporting unit is further configured to:
send a resource association indication information to a positioning server; wherein the resource association indication information records an association relationship between the preset uplink positioning resource and the terminal identification of the terminal.

69. The positioning device according to claim 59, wherein the message reporting unit is further configured to:
send a candidate resource for sending the uplink positioning signal in a current cell to the positioning server;
obtain a recommended resource which is sent by the positioning server based on candidate resources of multiple base stations;
determine a preconfigured uplink positioning resource according to the recommended resource; and
broadcast the uplink positioning resource.

70. The positioning device according to claim 60, further comprising:
a broadcasting unit, configured to broadcast a preset PRACH opportunity and a preset preamble for sending the positioning wake-up indication.

71. A positioning device, performed by a positioning server and comprising:
a message receiving unit, configured to receive a positioning report message sent by a base station, wherein the positioning report message is used for an uplink positioning of a terminal which is in an inactive state or an idle state;
a resource determination unit, configured to determine a uplink positioning resource used for the terminal to send an uplink positioning signal, according to the positioning report message;
wherein the positioning report message comprises a terminal identification of the terminal, and the uplink positioning resource used for the terminal to send the uplink positioning signal is determined according to a pre-recorded association between the terminal identification and the uplink positioning resource pre-configured by the base station; or
the positioning report message comprises the uplink positioning resource allocated by the base station for the terminal to send an uplink positioning signal.

72. The positioning device according to claim 71, further comprising:
a resource indication unit, configured to send a positioning signal indication to a neighboring base station of the base station, wherein the positioning signal indication comprises the uplink positioning resource, and is configured to instruct the neighboring base station to use the uplink positioning resource to receive the uplink positioning signal.

73. A processor-readable storage medium, wherein the processor-readable storage medium stores a computer program, the computer program is configured to cause the processor to execute the positioning method according to any one of claims 1 to 10, or cause the processor to execute the positioning method according to any one of claims 11 to 23, or cause the processor to execute the positioning method according to any one of claims 24 to 25.
